# EUROPÄISCHE PATENTSCHRIFT

(11) **EP 3 974 101 B1**
(45) Veröffentlichungstag und Bekanntmachung des Hinweises auf die Patenterteilung: **06.11.2024**
(21) Anmeldenummer: 21193095.3
(22) Anmeldetag: 25.08.2021
(51) Int. Cl.: B23Q 11/02, B23Q 1/62, B23Q 7/04, B08B 1/00

(54) **WIEDERAUFBEREITUNGSVORRICHTUNG UND VERFAHREN ZUR WIEDERAUFBEREITUNG VON WERKZEUGEN, WERKZEUGAUFNAHMEN UND/ODER WERKZEUGEINHEITEN**
RECONDITIONING DEVICE AND METHOD FOR RECONDITIONING TOOLS, TOOL HOLDERS AND / OR TOOL UNITS
DISPOSITIF DE RETRAITEMENT ET PROCÉDÉ DE RETRAITEMENT PERMETTANT DE RETRAITER DES OUTILS, DES PORTE-OUTILS ET/OU DES UNITÉS D'OUTIL

(30) Priorität: 25.09.2020 DE 102020125141
(43) Veröffentlichungstag der Anmeldung: 30.03.2022
(73) Patentinhaber: E. Zoller GmbH & Co. KG Einstell- und Messgeräte, 74385 Pleidelsheim (DE)
(72) Erfinder: Pfau, Christian, 74379 Ingersheim (DE); Zoller, Alexander, 74385 Pleidelsheim (DE); Reichardt, Andreas, 74343 Sachsenheim (DE)
(74) Vertreter: Daub, Thomas

(56) Entgegenhaltungen:
- DE-A1- 102014 103 542
- DE-A1- 102017 119 107
- DE-U1- 202020 100 819

## Beschreibung

### Stand der Technik

Die Erfindung betrifft eine Wiederaufbereitungsvorrichtung nach dem Anspruch 1, ein System mit der Wiederaufbereitungsvorrichtung nach Anspruch 17 und ein Verfahren zur Wiederaufbereitung nach dem Anspruch 18.

In den Druckschriften DE 10 2017 119 107 A1, die die Basis für den Oberbegriff des Anspruchs 1 bildet, DE 20 2020 100 819 U1 und DE 10 2014 103 542 A1 ist bereits vorgeschlagen worden, dass Werkzeuge, Werkzeugaufnahmen und/oder Werkzeugeinheiten nach einem Gebrauch wiederaufbereitet, beispielsweise gereinigt und/oder konserviert, werden.

Die Aufgabe der Erfindung besteht insbesondere darin, eine gattungsgemäße Vorrichtung mit vorteilhaften Wiederaufbereitungseigenschaften zur Wiederaufbereitung von Werkzeugen, Werkzeugaufnahmen und/oder Werkzeugeinheiten bereitzustellen. Die Aufgabe wird erfindungsgemäß durch die Merkmale der Patentansprüche 1, 17 und 18 gelöst, während vorteilhafte Ausgestaltungen und Weiterbildungen der Erfindung den Unteransprüchen entnommen werden können.

### Vorteile der Erfindung

Es wird eine Wiederaufbereitungsvorrichtung, insbesondere eine Werkzeug- und/oder Werkzeugaufnahmen-Wiederaufbereitungsvorrichtung, vorzugsweise eine Reinigungs- und/oder Konservierungsvorrichtung, für Werkzeuge, Werkzeugaufnahmen und/oder Werkzeugeinheiten, mit zumindest einer Wiederaufbereitungseinheit, insbesondere zu einer Wiederaufbereitung gebrauchter und/oder verschmutzter Werkzeuge, Werkzeugaufnahmen und/oder Werkzeugeinheiten, mit zumindest einer Halteeinheit zu einer auswechselbaren Halterung der Werkzeuge, Werkzeugaufnahmen und/oder Werkzeugeinheiten und mit zumindest einer Handhabungseinheit, welche dazu vorgesehen ist, die Halteeinheit und zumindest einen Reinigungsbereich der Wiederaufbereitungseinheit zur Durchführung eines Reinigungsvorgangs an den Werkzeugen, Werkzeugaufnahmen und/oder Werkzeugeinheiten zumindest teilautomatisiert zueinander zu führen, wobei die Handhabungseinheit dazu vorgesehen ist, die Halteeinheit und den Reinigungsbereich der Wiederaufbereitungseinheit nach einer Durchführung des Reinigungsvorgangs zumindest teilautomatisiert wieder voneinander zu entfernen, und/oder wobei die Handhabungseinheit dazu vorgesehen ist, die Halteeinheit und zumindest einen weiteren Reinigungsbereich der Wiederaufbereitungseinheit nach der Durchführung des Reinigungsvorgangs zur Durchführung eines weiteren Reinigungsvorgangs zueinander zu führen, vorgeschlagen. Dadurch kann insbesondere eine vorteilhafte Werkzeugaufbereitung ermöglicht werden. Vorteilhaft kann eine zumindest teilautomatisierte, vorzugsweise zumindest zweistufige Wiederaufbereitung von Werkzeugen, Werkzeugaufnahmen und/oder Werkzeugeinheiten erreicht werden. Vorteilhaft kann eine besonders gründliche und/oder umfassende Reinigung ermöglicht werden. Vorteilhaft kann dadurch eine hohe Lebensdauer der Werkzeuge, der Werkzeugaufnahmen und/oder der Werkzeugeinheiten erreicht werden.

Die Wiederaufbereitungsvorrichtung ist insbesondere als eine Werkzeug- und/oder Werkzeugaufnahme-Wiederaufbereitungsvorrichtung, vorzugsweise als eine Werkzeug- und/oder Werkzeugaufnahme-Reinigungs- und/oder Konservierungsvorrichtung ausgebildet. Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, beispielsweise als ein Schrumpfspannfutter, als ein Hydrodehnfutter, als ein Pressspannfutter, als ein Spannzangenfutter oder dergleichen, ausgebildet. Die Werkzeuge sind als Zerspanungswerkzeuge zum Einsatz auf CNC-Maschinen ausgebildet. Beispielsweise können die Werkzeuge als Schaftwerkzeuge, vorzugsweise als Rotations-Schaftwerkzeuge, beispielsweise Bohrer, Fräser, Profilwerkzeuge und/oder Reibahlen ausgebildet sein, wobei vorzugsweise ein Schaft der Schaftwerkzeuge zu einer Montage in einer Werkzeugaufnahme vorgesehen ist. Zudem könnte das Werkzeug insbesondere als ein Komplettwerkzeug, beispielsweise als eine fixe Kombination aus Werkzeug und Werkzeugaufnahme, ausgebildet sein. Eine "Werkzeugeinheit" umfasst insbesondere ein Werkzeug und eine Werkzeugaufnahme, wobei vorzugsweise das Werkzeug auszugsfest in der Werkzeugaufnahme montiert ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Insbesondere ist die Halteeinheit zu einer auswechselbaren Halterung zumindest für Werkzeugaufnahmen der Größen HSK 40 bis HSK 100 und/oder Werkzeugaufnahmen anderer Typen, wie SK, Coromant Capto^{®}, KM oder dergleichen, vorgesehen. Die Halteeinheit ist insbesondere dazu vorgesehen, das Werkzeug, die Werkzeugaufnahme und/oder die Werkzeugeinheit zu greifen. Vorzugsweise umfasst die Halteeinheit eine Greifereinheit, welche bevorzugt dazu vorgesehen ist, ein Werkzeugfutter zu greifen. Beispielsweise greift die Greifereinheit ein HSK-Futter innen im HSK-Schaft. Beispielsweise greift die Greifereinheit ein SK-Futter am Anzugbolzen. Unter einer "auswechselbaren Halterung" soll insbesondere verstanden werden, dass die Halteeinheit dazu vorgesehen ist, mehrere Werkzeugaufnahmen, insbesondere auch mehrere unterschiedliche Werkzugaufnahmen, beispielsweise Werkzeugaufnahmen unterschiedlicher Größen oder Typen, nacheinander aufzunehmen und wieder loszulassen. Insbesondere ist die Halteeinheit dazu vorgesehen, Werkzeugaufnahmen unterschiedlicher Größen oder Typen zu haltern. Die Handhabungseinheit ist insbesondere als ein Handhabungsgerät und/oder Handhabungsroboter ausgebildet. Die Handhabungseinheit ist dazu vorgesehen, einen Materialfluss, insbesondere einen Fluss von Werkzeugen, Werkzeugaufnahmen und/oder Werkzeugeinheiten, zu einer als Wiederaufbereitungseinheit ausgebildeten Wirkstelle zu bewältigen. Die Halteeinheit ist, insbesondere mittels der Handhabungseinheit, zumindest entlang einer Bewegungsachse, vorzugsweise zumindest entlang zwei verschiedener, vorzugsweise zumindest im Wesentlichen zueinander senkrechter, Bewegungsachsen, bevorzugt relativ zu dem Reinigungsbereich, bewegbar. Alternativ oder zusätzlich ist der Reinigungsbereich, insbesondere mittels der Handhabungseinheit, zumindest entlang einer Bewegungsachse, vorzugsweise zumindest entlang zwei verschiedener, vorzugsweise zumindest im Wesentlichen zueinander senkrechter, Bewegungsachsen, bevorzugt relativ zu der Halteeinheit, bewegbar. Es ist jedoch auch denkbar, dass nur die Halteeinheit bewegbar ist und der Reinigungsbereich fixiert ist oder dass nur der Reinigungsbereich bewegbar ist und die Halteeinheit fixiert ist. In dem Reinigungsvorgang wird insbesondere eine Reinheit des gereinigten Bauteils wiederhergestellt. Vorzugsweise werden in dem Reinigungsvorgang Schmutzteile, beispielsweise Ölreste, Kühlmittelreste, Spanreste o.dgl. von dem gereinigten Bauteil entfernt. Insbesondere ist die Handhabungseinheit dazu vorgesehen, das Werkzeug, die Werkzeugaufnahme und/oder die Werkzeugeinheit aus einer Zuführung, beispielsweise aus einem Werkzeugwagen oder aus einer Palette, zu entnehmen.

Unter einer "teilautomatisierten" Funktion und/oder Bewegung eines Objekts soll insbesondere verstanden werden, dass zumindest ein Teil einer Funktion oder einer Bewegung des Objekts unabhängig von einer manuellen Steuerung durch einen Bediener erfolgt. Vorzugsweise erfolgt die durch die Handhabungseinheit erzeugte Bewegung der Halteeinheit und/oder des Reinigungsbereichs in zumindest einer Raum- und/oder Rotationsrichtung unabhängig von einer manuellen Steuerung des Bedieners. Bevorzugt weist die Wiederaufbereitungsvorrichtung eine Steuer- und/oder Regeleinheit auf, welche zumindest dazu vorgesehen ist, die Handhabungseinheit zu steuern. Besonders bevorzugt ist die Handhabungseinheit zumindest teilweise CNC-gesteuert und/oder pneumatisch gesteuert. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit, vorzugsweise einem Prozessor, und mit einer Speichereinheit, vorzugsweise einem Speichermedium, sowie mit einem in der Speichereinheit gespeicherten Betriebsprogramm verstanden werden. Der Reinigungsbereich und/oder der weitere Reinigungsbereich ist insbesondere als ein Bereich ausgebildet, der für eine Durchführung eines Reinigungsvorgangs vorgesehen ist. Vorzugsweise umfasst der Reinigungsbereich und/oder der weitere Reinigungsbereich eine Reinigungsvorrichtung. Bevorzugt umfassen der Reinigungsbereich und der weitere Reinigungsbereich voneinander verschieden und/oder getrennt ausgebildete Reinigungsvorrichtungen. Insbesondere ist die Reinigungsvorrichtung zumindest teilweise in dem Reinigungsbereich angeordnet. Insbesondere ist eine weitere Reinigungsvorrichtung zumindest teilweise in dem weiteren Reinigungsbereich angeordnet. Insbesondere ist die Reinigungsvorrichtung positionsfest in dem Reinigungsbereich angeordnet. Insbesondere ist die weitere Reinigungsvorrichtung positionsfest in dem weiteren Reinigungsbereich angeordnet. Insbesondere ist die Reinigungsvorrichtung relativ zu dem Reinigungsbereich unbeweglich. Insbesondere ist die weitere Reinigungsvorrichtung relativ zu dem weiteren Reinigungsbereich unbeweglich. Vorzugsweise ist die Reinigungsvorrichtung und/oder die weitere Reinigungsvorrichtung frei von beweglichen Teilen. Insbesondere sind der Reinigungsbereich und der weitere Reinigungsbereich zueinander überlappungsfrei. Insbesondere grenzen der Reinigungsbereich und der weitere Reinigungsbereich direkt aneinander an. Insbesondere sind der Reinigungsbereich und der weitere Reinigungsbereich zu einer Reinigung unterschiedlicher Teilbereiche der Werkzeugaufnahme vorgesehen. Insbesondere sind der Reinigungsvorgang und der weitere Reinigungsvorgang zueinander zeitlich überlappungsfrei.

Ferner wird vorgeschlagen, dass die Handhabungseinheit dazu vorgesehen ist, die Werkzeuge, die Werkzeugaufnahmen und/oder die Werkzeugeinheiten zumindest teilautomatisiert durch eine Bewegung der Halteeinheit in den Reinigungsbereich der Wiederaufbereitungseinheit zu verbringen und nach Durchführung des Reinigungsvorgangs zumindest teilautomatisiert wieder aus dem Reinigungsbereich der Wiederaufbereitungseinheit zu entfernen und/oder das Werkzeug, die Werkzeugaufnahme und/oder die Werkzeugeinheit nach Durchführung des Reinigungsvorgangs zumindest teilautomatisiert in den weiteren Reinigungsbereich der Wiederaufbereitungseinheit zur Durchführung des weiteren Reinigungsvorgangs zu verbringen. Dadurch kann insbesondere eine vorteilhafte Werkzeugaufbereitung ermöglicht werden. Vorteilhaft kann eine zumindest teilautomatisierte, vorzugsweise zumindest zweistufige Wiederaufbereitung von Werkzeugen, Werkzeugaufnahmen und/oder Werkzeugeinheiten erreicht werden. Vorteilhaft kann eine einfache Ausgestaltung und/oder Steuerung der Handhabungseinheit erreicht werden.

Wenn die Halteeinheit zumindest die Greifereinheit umfasst, welche dazu vorgesehen ist, eine Werkzeugeinheit, ein Werkzeug und/oder eine Werkzeugaufnahme zu greifen, kann vorteilhaft eine einfache Handhabung der Werkzeugeinheit, des Werkzeugs und/oder der Werkzeugaufnahme erreicht werden. Vorteilhaft kann eine Handhabung von vielen verschiedenen Werkzeugeinheiten, Werkzeugen und/oder Werkzeugaufnahmen, insbesondere der vorgenannten Werkzeugaufnahmen, erreicht werden.

Außerdem wird vorgeschlagen, dass die Halteeinheit, vorzugsweise die Greifereinheit, dazu vorgesehen ist, eine Werkzeugeinheit, ein Werkzeug und/oder eine Werkzeugaufnahme derart zu haltern und/oder zu greifen, dass eine Oberseite des Werkzeugs, der Werkzeugaufnahme und/oder der Werkzeugeinheit in Richtung des Reinigungsbereichs zeigt. Dadurch kann insbesondere eine vorteilhafte Werkzeugaufbereitung ermöglicht werden. Vorteilhaft kann eine besonders gründliche Reinigung erreicht werden. Insbesondere sind/ist die Werkzeugeinheit, das Werkzeug und/oder die Werkzeugaufnahme derart in der Halteeinheit befestigt, dass die Werkzeugeinheit, das Werkzeug und/oder die Werkzeugaufnahme von der Halteeinheit, insbesondere von der Greifereinheit, wegzeigen/wegzeigt. Insbesondere greift die Greifereinheit das Werkzeug, die Werkzeugeinheit und/oder die Werkzeugaufnahme jeweils auf einer Unterseite. Vorzugsweise greift die Greifereinheit das Werkzeug am Werkzeugschaft. Vorzugsweise greift die Greifereinheit die Werkzeugaufnahme und/oder die Werkzeugeinheit in einem Bereich, in dem die Werkzeugaufnahme an einer Werkzeugmaschine montiert wird. Unter einer "Oberseite des Werkzeugs" soll insbesondere ein Bereich des Werkzeugs, insbesondere des Schaftwerkzeugs, verstanden werden, in dem ein Arbeitsbereich, beispielsweise eine Schneide, des Werkzeugs angeordnet ist. Unter einer "Oberseite der Werkzeugaufnahme" soll insbesondere ein Bereich der Werkzeugaufnahme verstanden werden, in dem ein Aufnahmebereich zur Aufnahme des Werkzeugs angeordnet ist. Unter einer "Oberseite der Werkzeugeinheit" soll insbesondere ein Bereich der Werkzeugeinheit verstanden werden, in dem das Werkzeug angeordnet ist.

Des Weiteren wird vorgeschlagen, dass die Handhabungseinheit, insbesondere die Greifereinheit, dazu vorgesehen ist, eine Werkzeugeinheit, ein Werkzeug und/oder eine Werkzeugaufnahme, welche/s von der Halteeinheit gehaltert und/oder gegriffen ist, relativ zu der Wiederaufbereitungseinheit zu rotieren, insbesondere die Werkzeugeinheit, das Werkzeug und/oder die Werkzeugaufnahme durch eine Erzeugung einer Rotationsbewegung mittels der Halteeinheit, vorzugsweise mittels der Greifereinheit, um eine Hauptrotationsachse des Werkzeugs und/oder der Werkzeugaufnahme, vorzugsweise in einer oder in zwei Rotationsrichtungen, zu rotieren. Dadurch kann insbesondere eine vorteilhafte Werkzeugaufbereitung ermöglicht werden. Vorteilhaft kann eine besonders gründliche Reinigung erreicht werden. Vorteilhaft kann dadurch eine möglichst einfache Ausgestaltung der Reinigungsvorrichtung(en) ermöglicht werden. Insbesondere weist die Handhabungseinheit eine Rotationseinheit auf.

Außerdem wird vorgeschlagen, dass die Wiederaufbereitungsvorrichtung zumindest eine, insbesondere vertikale, Bewegungsachse aufweist, an der entlang eine von der Halteeinheit gehalterte und/oder gegriffene Werkzeugeinheit, ein von der Halteeinheit gehaltertes und/oder gegriffenes Werkzeug und/oder eine von der Halteeinheit gehalterte und/oder gegriffene Werkzeugaufnahme zumindest teilautomatisiert bewegbar ist. Dadurch kann insbesondere eine vorteilhafte Werkzeugaufbereitung ermöglicht werden. Vorteilhaft kann eine zumindest teilautomatisierte Wiederaufbereitung von Werkzeugen, Werkzeugaufnahmen und/oder Werkzeugeinheiten erreicht werden. Insbesondere ist die Halteeinheit entlang einem Turm der Wiederaufbereitungsvorrichtung (linear) beweglich gelagert.

Wenn die Wiederaufbereitungsvorrichtung zudem zumindest eine weitere, insbesondere horizontale, Bewegungsachse aufweist, entlang der eine von der Halteeinheit gehalterte und/oder gegriffene Werkzeugeinheit, ein von der Halteeinheit gehaltertes und/oder gegriffenes Werkzeug und/oder eine von der Halteeinheit gehalterte und/oder gegriffene Werkzeugaufnahme zumindest teilautomatisiert in eine zu der, insbesondere vertikalen, Bewegungsachse senkrechte Richtung bewegbar ist, kann eine vorteilhafte Werkzeugaufbereitung ermöglicht werden. Vorteilhaft kann eine zumindest teilautomatisierte Wiederaufbereitung von Werkzeugen, Werkzeugaufnahmen und/oder Werkzeugeinheiten erreicht werden. Vorteilhaft kann eine hohe Flexibilität der Wiederaufbereitungsvorrichtung erreicht werden. Insbesondere ist die Halteeinheit und/oder der Turm auf einem (linear) beweglichen, vorzugsweise horizontalen, Schlitten gelagert. Insbesondere ist die Handhabungseinheit dazu vorgesehen, das Werkzeug, die Werkzeugaufnahme und/oder die Werkzeugeinheit, vorzugsweise zumindest durch eine Bewegung entlang der horizontalen Bewegungsachse, von dem Reinigungsbereich in den weiteren Reinigungsbereich zu überführen. Insbesondere ist die Handhabungseinheit dazu vorgesehen, das Werkzeug, die Werkzeugaufnahme und/oder die Werkzeugeinheit, vorzugsweise zumindest durch eine Bewegung entlang der horizontalen Bewegungsachse, von dem Reinigungsbereich und/oder dem weiteren Reinigungsbereich in einen Konservierungsbereich der Wiederaufbereitungseinheit zu überführen. Insbesondere ist die Handhabungseinheit dazu vorgesehen, das Werkzeug, die Werkzeugaufnahme und/oder die Werkzeugeinheit, vorzugsweise zumindest durch eine Bewegung entlang der horizontalen Bewegungsachse, von dem Konservierungsbereich in einen weiteren Konservierungsbereich der Wiederaufbereitungseinheit zu überführen.

Wenn außerdem die Handhabungseinheit dazu vorgesehen ist, das Werkzeug, die Werkzeugaufnahme, die Werkzeugeinheit und/oder die Wiederaufbereitungseinheit während der Durchführung des Reinigungsvorgangs zu bewegen, insbesondere auf und ab zu bewegen und/oder zu rotieren, kann vorteilhaft eine besonders effektive, effiziente und/oder gründliche Reinigung erreicht werden.

Zusätzlich weist die erfindungsgemäße Wiederaufbereitungseinheit zumindest eine Reinigungseinheit mit einem oder mehreren Reinigungsbereichen und zumindest eine Konservierungseinheit mit zumindest einem oder mehreren Konservierungsbereichen auf. Dadurch kann insbesondere eine vorteilhafte Werkzeugaufbereitung ermöglicht werden. Vorteilhaft kann dadurch eine hohe Lebensdauer der Werkzeuge, der Werkzeugaufnahmen und/oder der Werkzeugeinheiten erreicht werden. Insbesondere ist die Reinigungseinheit zur Durchführung des Reinigungsvorgangs vorgesehen. Insbesondere ist die Reinigungseinheit zur Durchführung des weiteren Reinigungsvorgangs vorgesehen. Insbesondere umfasst die Reinigungseinheit zumindest die Reinigungsvorrichtung und die weitere Reinigungsvorrichtung. Insbesondere ist die Konservierungseinheit zu einem an den Reinigungsvorgang und/oder den weiteren Reinigungsvorgang anschließenden Konservierungsvorgang der gereinigten Objekte vorgesehen. Insbesondere ist die Konservierungseinheit zu einem an den Konservierungsvorgang anschließenden weiteren Konservierungsvorgang vorgesehen. Insbesondere umfasst die Konservierungseinheit den Konservierungsbereich und den davon getrennt ausgebildeten weiteren Konservierungsbereich. Bevorzugt umfassen der Konservierungsbereich und der weitere Konservierungsbereich voneinander verschieden und/oder getrennt ausgebildete Konservierungsvorrichtungen. Insbesondere ist die Konservierungsvorrichtung zumindest teilweise in dem Konservierungsbereich angeordnet. Insbesondere ist eine weitere Konservierungsvorrichtung zumindest teilweise in dem weiteren Konservierungsbereich angeordnet. Insbesondere ist die Konservierungsvorrichtung positionsfest in dem Konservierungsbereich angeordnet. Insbesondere ist die weitere Konservierungsvorrichtung positionsfest in dem weiteren Konservierungsbereich angeordnet. Insbesondere ist die Konservierungsvorrichtung relativ zu dem Konservierungsbereich unbeweglich. Insbesondere ist die weitere Konservierungsvorrichtung relativ zu dem weiteren Konservierungsbereich unbeweglich. Vorzugsweise ist die Konservierungsvorrichtung und/oder die weitere Konservierungsvorrichtung frei von beweglichen Teilen. Insbesondere sind der Konservierungsbereich und der weitere Konservierungsbereich zueinander überlappungsfrei. Insbesondere grenzen der Konservierungsbereich und der weitere Konservierungsbereich direkt aneinander an. Insbesondere sind der Konservierungsbereich und der weitere Konservierungsbereich zu einer Konservierung unterschiedlicher Teilbereiche der Werkzeugaufnahme vorgesehen. Insbesondere sind ein Konservierungsvorgang in dem Konservierungsbereich und der weitere Konservierungsvorgang in dem weiteren Konservierungsbereich zueinander zeitlich überlappungsfrei. Insbesondere grenzen einer der Konservierungsbereiche und einer der Reinigungsbereiche direkt aneinander an. Vorzugsweise sind die Konservierungsbereiche und die Reinigungsbereiche etwa auf gleicher (vertikaler) Höhe angeordnet.

Ferner wird vorgeschlagen, dass der Reinigungsbereich der Wiederaufbereitungseinheit zumindest zu einer Dampfreinigung von Werkzeugen, Werkzeugaufnahmen und/oder Werkzeugeinheiten, insbesondere von Außenseiten der Werkzeuge, der Werkzeugaufnahmen und/oder der Werkzeugeinheiten, vorgesehen ist. Dadurch kann vorteilhaft eine besonders gründliche und/oder ressourcensparende Reinigung erreicht werden. Vorteilhaft können durch den Dampf auch schwer zugängliche Stellen erreicht werden. Insbesondere werden die Werkzeuge, Werkzeugaufnahmen und/oder Werkzeugeinheiten zur Reinigung von den Reinigungsvorrichtungen mit dem Dampf angeblasen. Vorzugsweise ist der Dampf als Wasserdampf ausgebildet. Zusätzlich ist denkbar, dass der Wasserdampf Reinigungszusätze enthält. Vorzugsweise ist der Dampf als Heißdampf ausgebildet. Insbesondere ist die Reinigungsvorrichtung als eine oder mehrere Reinigungsdüse(n) ausgebildet. Insbesondere ist die Reinigungsdüse in Richtung eines Inneren des Reinigungsbereichs ausgerichtet. Insbesondere ist die Reinigungsdüse zu einer Ausgabe von Reinigungsdampf vorgesehen.

Wenn zusätzlich der weitere Reinigungsbereich der Wiederaufbereitungseinheit zumindest zu einer Reinigung, insbesondere zu einer Dampfreinigung, von Innenseiten von Werkzeugaufnahmen, insbesondere von Werkzeugaufnahmeöffnungen oder Werkzeugaufnahmebereichen von Werkzeugaufnahmen, wie beispielsweise von Spannbohrungen, vorgesehen ist, kann vorteilhaft eine besonders gründliche Reinigung erreicht werden.

Vorteilhaft weist der weitere Reinigungsbereich eine Reinigungslanze auf, welche dazu vorgesehen ist, bei dem Reinigungsvorgang an den Werkzeugaufnahmen zumindest teilweise in die Innenseiten der Werkzeugaufnahmen, insbesondere in die Werkzeugaufnahmeöffnungen oder Werkzeugaufnahmebereiche und/oder Spannbohrungen der Werkzeugaufnahmen, einzugreifen. Dadurch kann vorteilhaft eine besonders hohe Reinigungsgründlichkeit erreicht werden. Vorteilhaft kann eine Komplettreinigung einer Werkzeugaufnahme erreicht werden. Die Reinigungslanze ragt vorzugsweise in den weiteren Reinigungsbereich, insbesondere in Vertikalrichtung, hinein. Die Reinigungslanze ist insbesondere als ein dünner länglicher Stab ausgebildet, welcher vorzugsweise an einem oberen Ende, insbesondere an einem der Halteeinheit zugewandten Ende, eine oder mehrere Reinigungsdüsen umfasst. Insbesondere ist zumindest eine der Reinigungsdüsen der Reinigungslanze in Umfangrichtung der Reinigungslanze ausgerichtet. Insbesondere ist zumindest eine der Reinigungsdüsen der Reinigungslanze in einer Axialrichtung der Reinigungslanze (nach oben) ausgerichtet. Insbesondere ist die Reinigungslanze als eine rückwärtswirkende Dampfdüse ausgebildet. Insbesondere ist die Reinigungslanze dazu vorgesehen, in eine Öffnung eines Werkzeugs, einer Werkzeugaufnahme und/oder einer Werkzeugeinheit, vorzugsweise in eine Werkzeugaufnahmeöffnung der Werkzeugaufnahme, einzugreifen. Vorzugsweise ist die Reinigungslanze dazu vorgesehen, ein Inneres der Werkzeugaufnahmeöffnung der Werkzeugaufnahme, welche normalerweise zu einer Aufnahme des Werkzeugschafts eines Werkzeugs vorgesehen ist, mit Reinigungsdampf zu besprühen und bevorzugt dadurch zu reinigen. Vorzugsweise wird die Werkzeugaufnahme während einer Aktivierung der Sprühfunktion der Reinigungslanze von der Handhabungseinheit auf- und ab bewegt und/oder rotiert.

Außerdem wird vorgeschlagen, dass die Wiederaufbereitungsvorrichtung eine Umhausung aufweist, welche den Reinigungsbereich und insbesondere den weiteren Reinigungsbereich zumindest zu fünf Seiten direkt oder indirekt begrenzt. Dadurch kann vorteilhaft eine entfernte Verschmutzung eingefangen und/oder eingesammelt werden. Vorteilhaft kann eine Konzentration des Reinigungsdampfs auf die zu reinigenden Bereiche und/oder Bauteile erreicht werden. Insbesondere ist die Umhausung und/oder der Reinigungsbereich nach oben hin, vorzugsweise in Richtung der Halteeinheit, geöffnet. Insbesondere bildet die Umhausung eine Art Wanne, insbesondere Reinigungswanne, aus. Insbesondere ist die Umhausung dazu vorgesehen, zumindest während des Reinigungsvorgangs die Werkzeugaufnahme, das Werkzeug und/oder die Werkzeugeinheit zumindest teilweise aufzunehmen. Insbesondere ist die Handhabungseinheit dazu vorgesehen, die Werkzeugaufnahme, das Werkzeug und/oder die Werkzeugeinheit zumindest teilweise in die Umhausung einzustecken und/oder einzutauchen und wieder aus der Umhausung zu entnehmen. Die Umhausung umschließt insbesondere den Reinigungsbereich und den weiteren Reinigungsbereich gemeinsam zu fünf Seiten. Dabei ist insbesondere jeweils der Reinigungsbereich und der weitere Reinigungsbereich zu zumindest vier Seiten direkt von der Umhausung begrenzt. Die fünfte von der Umhausung begrenzte Seite eines der Reinigungsbereiche kann jeweils direkt an den benachbarten Reinigungsbereich anschließen, welcher dann zu dieser Seite direkt von der Umhausung begrenzt ist. Die fünfte Seite ist also insbesondere indirekt von der Umhausung begrenzt. Insbesondere ist ein Übergang von dem Reinigungsbereich zu dem weiteren Reinigungsbereich frei von einer Abtrennung oder Wand. Insbesondere sind der Reinigungsbereich und der weitere Reinigungsbereich entlang der horizontalen Bewegungsachse der Wiederaufbereitungsvorrichtung, insbesondere der Handhabungseinheit, direkt nebeneinander angeordnet.

Weiterhin wird vorgeschlagen, dass die Wiederaufbereitungseinheit zumindest eine Absaugeinheit aufweist. Dadurch kann vorteilhaft eine hohe Reinigungseffizienz erreicht werden. Vorteilhaft kann ein Verschmutzen der Wiederaufbereitungseinheit, insbesondere des Reinigungsbereichs, verhindert werden. Dadurch kann eine vorteilhaft lange, insbesondere wartungsfreie, Betriebsdauer der Wiederaufbereitungsvorrichtung ermöglicht werden. Insbesondere ist die Absaugeinheit dazu vorgesehen, Schmutzpartikel, welche von dem Werkzeug, von der Werkzeugaufnahme und/oder von der Werkzeugeinheit entfernt wurden, abzusaugen. Insbesondere ist die Absaugeinheit mit dem Reinigungsbereich, insbesondere mit der Umhausung, verbunden. Insbesondere ist die Absaugeinheit dazu vorgesehen, Schmutzpartikel, Reinigungsdampf und/oder Reinigungsflüssigkeit aus dem Reinigungsbereich und/oder aus dem von der Umhausung umschlossenen Bereich abzusaugen. Vorzugsweise saugt die Absaugeinheit von einem unteren Teil des Reinigungsbereichs ausgehend die Reinigungsbereiche ab.

Vorzugsweise ist ein Eingang der Absaugeinheit in einem unteren Bereich der Umhausung angeordnet. Alternativ oder zusätzlich kann die Absaugeinheit auch zu einer Absaugung des Konservierungsbereichs der Wiederaufbereitungseinheit vorgesehen sein. Insbesondere ist die Absaugeinheit dazu vorgesehen, Konservierungsflüssigkeitsreste aus dem Konservierungsbereich und/oder aus einem von einer weiteren Umhausung umschlossenen Bereich abzusaugen. Vorzugsweise saugt die Absaugeinheit von einem unteren Teil des Konservierungsbereichs ausgehend die Konservierungsbereiche ab.

Zudem wird vorgeschlagen, dass die Wiederaufbereitungseinheit zumindest einen Abscheider, insbesondere Ölabscheider und/oder Wasserabscheider, aufweist. Dadurch kann vorteilhaft eine hohe Effizienz der Wiederaufbereitungseinheit erreicht werden. Vorteilhaft kann durch eine Rückgewinnung des nicht auf dem Werkzeug verbliebenen Konservierungsmittels (z.B. Öl) aus dem Konservierungsvorgang und/oder durch eine Wiederaufbereitung des verbrauchten Reinigungsmittels aus dem Reinigungsvorgang ein Ressourcenverbrauch minimiert werden. Dadurch können vorteilhaft Verbrauchsmittelkosten gering gehalten werden. Insbesondere ist der Abscheider zu einer Bearbeitung der von der Absaugeinheit abgesaugten Flüssigkeiten vorgesehen.

Außerdem ist der erfindungsgemäße Konservierungsbereich der Wiederaufbereitungseinheit zumindest zu einer Konservierung von Werkzeugen, Werkzeugaufnahmen und/oder Werkzeugeinheiten, insbesondere von Außenseiten der Werkzeuge, der Werkzeugaufnahmen und/oder der Werkzeugeinheiten, durch ein Besprühen der Werkzeuge, Werkzeugaufnahmen und/oder Werkzeugeinheiten mit einer vernebelten Konservierungsflüssigkeit, vorzugsweise mit einem Ölnebel, vorgesehen. Dadurch kann vorteilhaft eine besonders umfassende Konservierung erreicht werden. Vorteilhaft kann eine Lebensdauerreduzierung, z.B. durch Beschädigungen oder durch Rosten, vermieden werden. Insbesondere
ist die Konservierungsvorrichtung als eine oder mehrere Konservierungsdüse(n) ausgebildet. Insbesondere ist die

Konservierungsdüse in Richtung eines Inneren des Konservierungsbereichs ausgerichtet. Insbesondere ist die Konservierungsdüse zu einer Erzeugung und/oder einer Ausgabe der vernebelten Konservierungsflüssigkeit, insbesondere des Ölnebels, vorgesehen.

Zusätzlich weist die erfindungsgemäße Wiederaufbereitungseinheit zumindest einen weiteren Konservierungsbereich auf, welcher zumindest zu einer Konservierung von Innenseiten von Werkzeugaufnahmen, insbesondere von Werkzeugaufnahmeöffnungen oder Werkzeugaufnahmebereichen von Werkzeugaufnahmen, wie beispielsweise von Spannbohrungen, vorzugsweise mittels eines Besprühens mit Ölnebel, vorgesehen ist. Der weitere Konservierungsbereich umfasst insbesondere eine weitere Konservierungsvorrichtung der Konservierungseinheit. Die weitere Konservierungsvorrichtung ist insbesondere als eine weitere Konservierungsdüse ausgebildet. Die weitere Konservierungsdüse weist insbesondere eine Hauptsprührichtung auf, welche abweichend von einer Hauptsprührichtung der Konservierungsdüse ist. Insbesondere ist die Hauptsprührichtung der weiteren Konservierungsdüse zumindest im Wesentlichen senkrecht zu der Hauptsprührichtung der weiteren Konservierungsdüse ausgerichtet. Insbesondere ist die Hauptsprührichtung der weiteren Konservierungsdüse zumindest im Wesentlichen vertikal nach oben ausgerichtet. Insbesondere zeigt die Hauptsprührichtung der weiteren Konservierungsdüse bei dem Konservierungsvorgang auf die Halteeinheit hin. Insbesondere ist die weitere Konservierungsdüse dazu vorgesehen, in die Werkzeugaufnahmeöffnung der Werkzeugaufnahme hinein zu sprühen.

Erfindungsgemäß weist der weitere Konservierungsbereich eine Düse, insbesondere die weitere Konservierungsdüse, auf, welche zumindest im Wesentlichen parallel zu einer, insbesondere vertikalen, Bewegungsachse der von der Halteeinheit gehalterten und/oder gegriffenen Werkzeugaufnahme, vorzugsweise in Richtung einer Haupterstreckung der Werkzeugaufnahmeausnehmung und/oder Spannbohrung der von der Halteeinheit gehalterten und/oder gegriffenen

Werkzeugaufnahme, ausgerichtet ist. Dadurch kann vorteilhaft eine effektive Konservierung der Werkzeugaufnahme erreicht werden, welche vorzugsweise eine Konservierung der Werkzeugaufnahmeöffnung und/oder des Werkzeugaufnahmebereichs der Werkzeugaufnahme umfasst.

Außerdem wird vorgeschlagen, dass die Wiederaufbereitungsvorrichtung eine weitere Umhausung aufweist, welche den Konservierungsbereich und insbesondere den weiteren Konservierungsbereich zumindest zu fünf Seiten direkt oder indirekt begrenzt. Dadurch kann vorteilhaft eine nicht auf dem Werkzeug, der Werkzeugaufnahme und/oder der Werkzeugeinheit verbliebene Konservierungsflüssigkeit eingefangen und/oder eingesammelt werden. Vorteilhaft kann eine Konzentration der Konservierungsflüssigkeit auf die zu konservierenden Bereiche und/oder Bauteile erreicht werden. Insbesondere ist die weitere Umhausung und/oder der Konservierungsbereich nach oben hin, vorzugsweise in Richtung der Halteeinheit geöffnet. Insbesondere bildet die weitere Umhausung eine Art Wanne, insbesondere Konservierungswanne, aus. Insbesondere ist die weitere Umhausung dazu vorgesehen, zumindest während des Konservierungsvorgangs die Werkzeugaufnahme, das Werkzeug und/oder die Werkzeugeinheit zumindest teilweise aufzunehmen. Insbesondere ist die Handhabungseinheit dazu vorgesehen, die Werkzeugaufnahme, das Werkzeug und/oder die Werkzeugeinheit zumindest teilweise in die weitere Umhausung einzustecken und/oder einzutauchen und wieder aus der weiteren Umhausung zu entnehmen. Insbesondere ist die Handhabungseinheit dazu vorgesehen, die Werkzeugaufnahme, das Werkzeug und/oder die Werkzeugeinheit von der Umhausung in die weitere Umhausung zu verbringen. Die weitere Umhausung umschließt insbesondere den Konservierungsbereich und den weiteren Konservierungsbereich gemeinsam zu fünf Seiten. Dabei ist insbesondere jeweils der Konservierungsbereich und der weitere Konservierungsbereich zu zumindest vier Seiten direkt von der Umhausung begrenzt. Die fünfte von der weiteren Umhausung begrenzte Seite eines der Konservierungsbereiche kann jeweils direkt an den benachbarten Konservierungsbereich anschließen, welcher dann zu dieser Seite direkt von der Umhausung begrenzt ist. Die fünfte Seite ist also insbesondere indirekt von der weiteren Umhausung begrenzt. Insbesondere ist ein Übergang von dem Konservierungsbereich zu dem weiteren Konservierungsbereich frei von einer Abtrennung oder Wand. Insbesondere sind der Konservierungsbereich und der weitere Konservierungsbereich entlang der horizontalen Bewegungsachse der Wiederaufbereitungsvorrichtung, insbesondere der Handhabungseinheit, direkt nebeneinander angeordnet. Insbesondere sind die Reinigungsbereiche und die Konservierungsbereiche entlang der horizontalen Bewegungsachse der Wiederaufbereitungsvorrichtung, insbesondere der Handhabungseinheit, direkt nebeneinander angeordnet.

Wenn der der Konservierungsbereich entlang der weiteren, insbesondere horizontalen, Bewegungsachse neben dem Reinigungsbereich, insbesondere neben den Reinigungsbereichen, vorzugsweise auf etwa derselben vertikalen Höhe wie der/die Reinigungsbereich/e, angeordnet ist, kann vorteilhaft eine besonders einfache Abfolge von Reinigungsvorgang und Konservierungsvorgang erreicht werden. Vorteilhaft kann eine hohe Effizienz der Wiederaufbereitung erreicht werden.

Ferner wird ein System vorgeschlagen mit der Wiederaufbereitungsvorrichtung und mit einem Handhabungsroboter zu einer automatischen Bestückung der Wiederaufbereitungsvorrichtung mit Werkzeugen, Werkzeugaufnahmen und/oder Werkzeugeinheiten und/oder zu einer Entnahme von Werkzeugen, Werkzeugaufnahmen und/oder Werkzeugeinheiten aus der Wiederaufbereitungsvorrichtung und mit einem oder mehreren Geräten aus der folgenden Liste von Geräten:
- Werkzeugeinspanngerät zu einem zumindest teilautomatisierten Einspannen von Werkzeugen in Werkzeugaufnahmen,
- Mess- und/oder Einstellgerät für Werkzeuge zu einem zumindest teilautomatisierten Einstellen und/oder Vermessen von Werkzeugen, Werkzeugaufnahmen und/oder Werkzeugeinheiten,
- Schrumpfspanngerät zu einem zumindest teilautomatisierten induktiven, thermischen Ein- und/oder Ausspannen von Werkzeugen in und/oder aus Werkzeugaufnahmen,

- Kühlgerät zu einem zumindest teilautomatisierten Abkühlen von zuvor erhitzten Werkzeugaufnahmen oder Werkzeugeinheiten,
- Werkzeugmontagegerät zu einer zumindest teilautomatisierten Montage von mehrteiligen Werkzeugen,
- Wuchtstation zu einem zumindest teilautomatisierten Wuchten von Werkzeugeinheiten. Dadurch kann insbesondere ein umfassendes Werkzeug-Handling-System mit einer vorteilhaften Werkzeugaufbereitungsmöglichkeit geschaffen werden. Vorteilhaft kann eine zumindest teilautomatisierte Wiederaufbereitung von Werkzeugen, Werkzeugaufnahmen und/oder Werkzeugeinheiten erreicht werden. Es ist denkbar, dass die Wiederaufbereitungsvorrichtung in einem übergeordneten Gerät, beispielsweise in einer Multispann- und Mess- und/oder Einstellstation für Werkzeuge, wie sie in der deutschen Patentanmeldung mit der Anmeldenummer 10 2019 115 607.6 beschrieben ist, integriert ist. Insbesondere kann das System als eine Multispann- und Mess- und/oder Einstellstation wie sie in der deutschen Patentanmeldung mit der Anmeldenummer 10 2019 115 607.6 beschrieben ist, ausgebildet sein.

Unter einem "Handhabungsroboter" soll insbesondere ein Industrieroboter, vorzugsweise ein Gelenkarmroboter, insbesondere mit zumindest drei, vorzugsweise zumindest vier, bevorzugt zumindest fünf und besonders bevorzugt zumindest sechs unabhängig voneinander beweglichen Robotergelenken verstanden werden. Insbesondere ist der Handhabungsroboter verschieden und/oder getrennt von der Handhabungseinheit der Wiederaufbereitungsvorrichtung ausgebildet. Unter einem "Werkzeugeinspanngerät" soll insbesondere ein Gerät verstanden werden, welches dazu vorgesehen ist, ein Werkzeug in eine Werkzeugaufnahme zu montieren und/oder ein Werkzeug aus einer Werkzeugaufnahme zu demontieren. Insbesondere bildet das Werkzeugeinspanngerät ein Werkzeugeinspann- und/oder Werkzeugausspanngerät aus. Insbesondere ist das Werkzeugeinspanngerät dazu vorgesehen, einen Spannmechanismus einer Werkzeugaufnahme zu aktivieren, insbesondere einzustellen, und/oder den Spannmechanismus der Werkzeugaufnahme zu deaktivieren, insbesondere zu lösen. Zudem ist denkbar, dass das System mehrere unterschiedliche, für unterschiedliche Werkzeugspannverfahren vorgesehene Werkzeugeinspanngeräte aufweist. Insbesondere ist der Handhabungsroboter dazu vorgesehen, die Werkzeugeinspanngeräte zu bestücken, d.h. insbesondere Werkzeuge und/oder Werkzeugaufnahmen in die Werkzeugeinspanngeräte einzusetzen und/oder aus den Werkzeugeinspanngeräten zu entnehmen. Unter einem "Mess- und/oder Einstellgerät für Werkzeuge" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen, insbesondere optisch zu erfassen, und/oder einzustellen. Insbesondere ist der Handhabungsroboter dazu vorgesehen, das Mess- und/oder Einstellgerät für Werkzeuge zu bestücken.

Das Schrumpfspanngerät ist insbesondere dazu vorgesehen, ein Werkzeug in einer Werkzeugaufnahme zu befestigen, insbesondere mittels eines Einschrumpfens, und/oder aus der Werkzeugaufnahme zu entfernen, insbesondere mittels eines Ausschrumpfens. Vorzugsweise weist das Schrumpfspanngerät zumindest eine Induktionsheizeinheit zum Aufheizen eines eine Werkzeugaufnahmeöffnung umgebenden Werkzeugaufnahmebereichs einer Werkzeugaufnahme auf. Das Schrumpfspanngerät ist insbesondere dazu vorgesehen, bei einem Einschrumpfen die Werkzeugaufnahmeöffnung der Werkzeugaufnahme thermisch aufzuweiten, um eine Größe, insbesondere einen Durchmesser, der Werkzeugaufnahmeöffnung so zu vergrößern, dass ein Werkzeug in die Werkzeugaufnahmeöffnung hineinpasst. Vorzugsweise mittels eines anschließenden Abkühlens der Werkzeugaufnahme verringert sich die Größe, insbesondere der Durchmesser, der Werkzeugaufnahmeöffnung wieder und erzeugt somit einen Kraftschluss zwischen der Werkzeugaufnahme und dem Werkzeug. Vorzugsweise ist das Kühlgerät dazu vorgesehen, die Werkzeugaufnahme, insbesondere im Anschluss an eine Erhitzung mittels der Induktionsheizeinheit, vorzugsweise auf eine handwarme Temperatur, abzukühlen. Insbesondere ist der Handhabungsroboter dazu vorgesehen, das Schrumpfspanngerät zu bestücken, d.h. insbesondere Werkzeuge und/oder Werkzeugaufnahmen in das Schrumpfspanngerät einzusetzen und/oder aus dem Schrumpfspanngerät zu entnehmen.

Weiterhin wird ein Verfahren zur Wiederaufbereitung, insbesondere zur Reinigung und/oder Konservierung, von Werkzeugen, Werkzeugaufnahmen und/oder Werkzeugeinheiten mit der Wiederaufbereitungsvorrichtung vorgeschlagen. Dadurch kann insbesondere eine vorteilhafte Werkzeugaufbereitung ermöglicht werden.

Wenn in dem Verfahren zur Wiederaufbereitung das Werkzeug, die Werkzeugaufnahme und/oder die Werkzeugeinheit in einem Reinigungsschritt und/oder in einem Konservierungsschritt innerhalb zumindest einem der Reinigungsbereiche und/oder der Konservierungsbereiche rotiert und/oder auf und ab bewegt wird, kann eine besonders vorteilhafte, insbesondere gründliche, Reinigung und/oder Konservierung, insbesondere auch von komplizierten Oberflächen, erreicht werden.

Wenn in dem Verfahren zur Wiederaufbereitung außerdem das Werkzeug, die Werkzeugaufnahme und/oder die Werkzeugeinheit zwischen dem Reinigungsschritt und dem Konservierungsschritt von einem der Reinigungsbereiche, insbesondere automatisiert, in einen der Konservierungsbereiche verbracht wird, kann eine besonders hohe Effizienz erreicht werden. Vorteilhaft kann eine hohe Taktzahl erreicht werden.

Die erfindungsgemäße Wiederaufbereitungsvorrichtung, das erfindungsgemäße System und/oder das erfindungsgemäße Verfahren sollen hierbei nicht auf die oben beschriebene Anwendung und Ausführungsform beschränkt sein, sondern werden durch die Ansprüche definiert.

### Zeichnungen

Weitere Vorteile ergeben sich aus der folgenden Zeichnungsbeschreibung. In den Zeichnungen ist ein Ausführungsbeispiel der Erfindung dargestellt.

Es zeigen:
- Fig. 1: eine schematische Darstellung eines Systems mit einer Wiederaufbereitungsvorrichtung,
- Fig. 2: eine schematische perspektivische Ansicht der Wiederaufbereitungsvorrichtung,
- Fig. 3: eine schematische perspektivische Detailansicht einer Halteeinheit der Wiederaufbereitungsvorrichtung,
- Fig. 4: eine schematische Darstellung eines vergrößerten, perspektivisch dargestellten Ausschnitts der Wiederaufbereitungsvorrichtung mit Reinigungsbereichen und mit Konservierungsbereichen,
- Fig. 5: ein schematisches Ablaufdiagramm eines Verfahrens zur Wiederaufbereitung und
- Fig. 6a-6h: die Wiederaufbereitungsvorrichtung in verschiedenen Betriebszuständen während der Durchführung des Verfahrens zur Wiederaufbereitung.

### Beschreibung des Ausführungsbeispiels

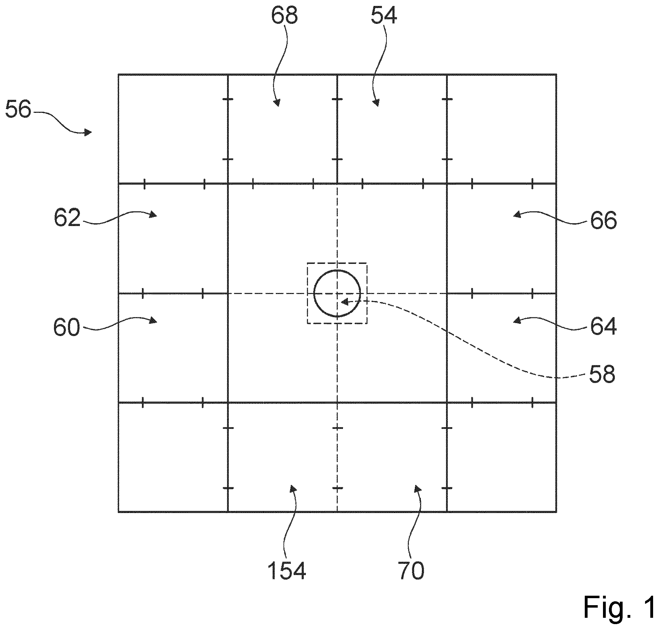

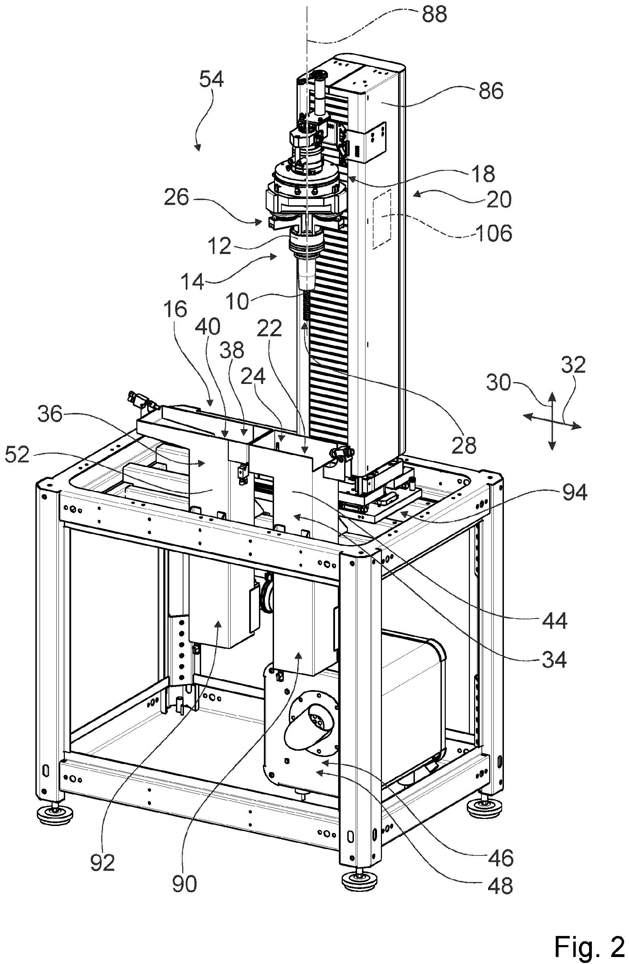

Die Fig. 1 zeigt schematisch ein System 56, welches als eine Multispann- und Mess- und/oder Einstellstation, wie sie in der deutschen Patentanmeldung mit der Anmeldenummer 10 2019 115 607.6 beschrieben ist, ausgebildet ist. Zusätzlich zu einer Multispann- und Mess- und/oder Einstellstation aus der deutschen Patentanmeldung mit der Anmeldenummer 10 2019 115 607.6 weist das System 56 eine Wiederaufbereitungsvorrichtung 54 auf (vgl. u.a. Figur 2). Das System 56 umfasst einen Handhabungsroboter 58. Der Handhabungsroboter 58 ist an einer zentralen Position des Systems 56 positioniert, von der aus dem Handhabungsroboter 58 ein Zugriff auf alle im Folgenden aufgeführten Geräte des Systems 56 ermöglicht ist. Der Handhabungsroboter 58 ist zu einer automatischen Bestückung der Wiederaufbereitungsvorrichtung 54 und/oder aller weiteren Geräte des Systems 56 mit Werkzeugen 10, Werkzeugaufnahmen 12 und/oder Werkzeugeinheiten 14 (vgl. Fig. 2) vorgesehen. Der Handhabungsroboter 58 ist zu einer Entnahme von Werkzeugen 10, Werkzeugaufnahmen 12 und/oder Werkzeugeinheiten 14 aus der Wiederaufbereitungsvorrichtung 54 und/oder aus allen weiteren Geräten des Systems 56 vorgesehen. Das System 56 umfasst Werkzeugeinspanngeräte 60 zu einem zumindest teilautomatisierten Einspannen von Werkzeugen 10 in Werkzeugaufnahmen 12. Das System 56 kann weitere Werkzeugeinspanngeräte 154 für weitere Einspannmethoden umfassen. Das System 56 umfasst ein Mess- und/oder Einstellgerät 62 für Werkzeuge 10 zu einem zumindest teilautomatisierten Einstellen und/oder optischen Vermessen von Werkzeugen 10, Werkzeugaufnahmen 12 und/oder Werkzeugeinheiten 14. Das System 56 umfasst ein Schrumpfspanngerät 64 zu einem automatisierten induktiven thermischen Ein- und/oder Ausspannen von Werkzeugen 10 in und/oder aus Werkzeugaufnahmen 12. Das System 56 umfasst ein Kühlgerät 66 zu einem automatisierten Abkühlen von zuvor erhitzten Werkzeugeinheiten 14. Das System 56 umfasst ein Werkzeugmontagegerät 68 zu einer automatisierten Montage von mehrteiligen Werkzeugen 10. Das System 56 umfasst eine Wuchtstation 70 zu einem zumindest teilautomatisierten Wuchten von Werkzeugeinheiten 14.

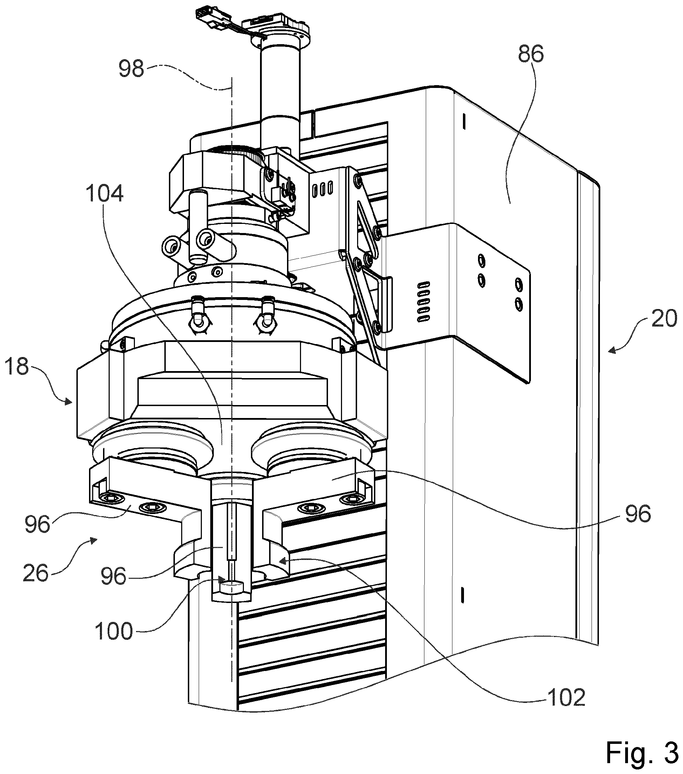

Die Fig. 2 zeigt eine schematische perspektivische Ansicht der Wiederaufbereitungsvorrichtung 54 für Werkzeuge 10, Werkzeugaufnahmen 12 und/oder Werkzeugeinheiten 14. Die Wiederaufbereitungsvorrichtung 54 ist als eine Reinigungs- und/oder Konservierungsvorrichtung für Werkzeuge 10, Werkzeugaufnahmen 12 und/oder Werkzeugeinheiten 14 ausgebildet. Die Wiederaufbereitungsvorrichtung 54 weist eine Wiederaufbereitungseinheit 16 auf. Die Wiederaufbereitungseinheit 16 ist zu einer Wiederaufbereitung, insbesondere zu einer Reinigung und einer anschließenden Konservierung, gebrauchter und/oder verschmutzter Werkzeuge 10, Werkzeugaufnahmen 12 und/oder Werkzeugeinheiten 14 vorgesehen. Die Wiederaufbereitungseinheit 16 weist eine Halteeinheit 18 auf. Die Halteeinheit 18 ist zu einer auswechselbaren Halterung der Werkzeuge 10, der Werkzeugaufnahmen 12 und/oder der Werkzeugeinheiten 14 vorgesehen (vgl. auch Fig. 3). Die Wiederaufbereitungseinheit 16 weist eine Handhabungseinheit 20 auf. Die Handhabungseinheit 20 ist dazu vorgesehen, die Halteeinheit 18 und zumindest einen Reinigungsbereich 22 der Wiederaufbereitungseinheit 16 zur Durchführung eines Reinigungsvorgangs an den Werkzeugen 10, den Werkzeugaufnahmen 12 und/oder den Werkzeugeinheiten 14 automatisiert zueinanderzuführen. Die Handhabungseinheit 20 ist zudem dazu vorgesehen, die Halteeinheit 18 und den Reinigungsbereich 22 der Wiederaufbereitungseinheit 16 nach der Durchführung des Reinigungsvorgangs automatisiert wieder voneinander zu entfernen. Außerdem ist die Handhabungseinheit 20 dazu vorgesehen, die Halteeinheit 18 und einen weiteren Reinigungsbereich 24 der Wiederaufbereitungseinheit 16 nach der Durchführung des Reinigungsvorgangs und nach der Entfernung der Halteeinheit 18 von dem Reinigungsbereich 22 zur Durchführung eines weiteren Reinigungsvorgangs zueinander zu führen.

Im beispielhaft dargestellten Ausführungsbeispiel ist nur die Handhabungseinheit 20 beweglich gelagert und die Reinigungsbereiche 22, 24 sind im Raum fixiert. Alternativ zu der beweglichen Lagerung der Handhabungseinheit 20 oder zusätzlich zu der beweglichen Lagerung der Handhabungseinheit 20 könnten jedoch selbstverständlich auch die Reinigungsbereiche 22, 24 beweglich gelagert sein. In der in den Figuren beispielhaft dargestellten Wiederaufbereitungsvorrichtung 54 ist jedoch die Handhabungseinheit 20 dazu vorgesehen, die Werkzeuge 10, die Werkzeugaufnahmen 12 und/oder die Werkzeugeinheiten 14 automatisiert durch eine Bewegung der Halteeinheit 18 in den Reinigungsbereich 22 der Wiederaufbereitungseinheit 16 zu verbringen, nach der Durchführung des Reinigungsvorgangs automatisiert wieder aus dem Reinigungsbereich 22 der Wiederaufbereitungseinheit 16 zu entfernen und nach Durchführung des Reinigungsvorgangs und nach der Entfernung aus dem Reinigungsbereich 22 automatisiert in den weiteren Reinigungsbereich 24 der Wiederaufbereitungseinheit 16 zur Durchführung des weiteren Reinigungsvorgangs zu verbringen. Dabei ist die Halteeinheit 18 dazu vorgesehen, die Werkzeugeinheit 14, das Werkzeug 10 und/oder die Werkzeugaufnahme 12 derart zu haltern und/oder zu greifen, dass eine Oberseite 28 des Werkzeugs 10, der Werkzeugaufnahme 12 und/oder der Werkzeugeinheit 14 in Richtung des Reinigungsbereichs 22, 24 zeigt.

Die Wiederaufbereitungsvorrichtung 54 weist eine vertikale Bewegungsachse 30 auf, an der entlang eine von der Halteeinheit 18 gehalterte und/oder gegriffene Werkzeugeinheit 14, ein von der Halteeinheit 18 gehaltertes und/oder gegriffenes Werkzeug 10 und/oder eine von der Halteeinheit 18 gehalterte und/oder gegriffene Werkzeugaufnahme 12 automatisiert bewegbar ist. Die Wiederaufbereitungsvorrichtung 54, insbesondere die Handhabungseinheit 20, weist einen Turm 86 auf, entlang dem die Halteeinheit 18 vertikalbeweglich gelagert ist. Die Bewegungsachse 30 verläuft zumindest im Wesentlichen parallel zu einer Vertikalerstreckung des Turms 86. Die Handhabungseinheit 20 umfasst eine in dem Turm 86 angeordnete Linearführung zu einer Auf- und Abbewegung der Halteeinheit 18 relativ zu den Reinigungsbereichen 22, 24.

Die Handhabungseinheit 20 ist zudem dazu vorgesehen, die Werkzeugeinheit 14, das Werkzeug 10 und/oder die Werkzeugaufnahme 12, welche/welches von der Halteeinheit 18 gehaltert und/oder gegriffen ist, relativ zu der Wiederaufbereitungseinheit 16 zu rotieren. Die Handhabungseinheit 20 ist dazu vorgesehen, die Werkzeugeinheit 14, das Werkzeug 10 und/oder die Werkzeugaufnahme 12, um eine jeweilige vorgesehene Rotationsachse 88 (Werkzeugrotationsachse und/oder Werkzeugaufnahmerotationsachse) zu rotieren. Die Handhabungseinheit 20 ist dazu vorgesehen, das Werkzeug 10, die Werkzeugaufnahme 12 und/oder die Werkzeugeinheit 14 während der Durchführung des Reinigungsvorgangs zu bewegen. Die Handhabungseinheit 20 ist dazu vorgesehen, das Werkzeug 10, die Werkzeugaufnahme 12 und/oder die Werkzeugeinheit 14 während der Durchführung des Reinigungsvorgangs zu auf und ab zu bewegen. Die Handhabungseinheit 20 ist dazu vorgesehen, das Werkzeug 10, die Werkzeugaufnahme 12 und/oder die Werkzeugeinheit 14 während der Durchführung des Reinigungsvorgangs zu rotieren. Alternativ oder zusätzlich ist jedoch auch denkbar, dass der Reinigungsbereich 22 während der Durchführung des Reinigungsvorgangs bewegbar, insbesondere auf- und abbewegbar, ist.

Der Reinigungsbereich 22 und der weitere Reinigungsbereich 24 sind direkt aneinandergrenzend angeordnet. Der Reinigungsbereich 22 und der weitere Reinigungsbereich 24 sind entlang einer Horizontalrichtung der Wiederaufbereitungsvorrichtung 54 nebeneinander angeordnet. Der Reinigungsbereich 22 und der weitere Reinigungsbereich 24 gehen, insbesondere barrierefrei, ineinander über. Die Wiederaufbereitungsvorrichtung 54, insbesondere die Wiederaufbereitungseinheit 16, weist eine Umhausung 44 auf. Die Umhausung 44 begrenzt den Reinigungsbereich 22 und den weiteren Reinigungsbereich 24 zu fünf Seiten. Die durch die Umhausung 44 begrenzten Reinigungsbereiche 22, 24 sind lediglich nach oben hin und zu dem jeweiligen anderen benachbarten Reinigungsbereich 22, 24 hin offen. Die Handhabungseinheit 20 ist dazu vorgesehen, mittels einer Bewegung der Halteeinheit 18 entlang der Bewegungsachse 30 das Werkzeug 10, die Werkzeugaufnahme 12 und/oder die Werkzeugeinheit 14 zur Durchführung des Reinigungsvorgangs, vorzugsweise nacheinander, in die durch die Umhausung 44 umschlossenen Reinigungsbereiche 22, 24 einzutauchen und wieder daraus zu entnehmen. Die Wiederaufbereitungseinheit 16 weist eine Absaugeinheit 46 auf. Die Absaugeinheit 46 ist mit der Umhausung 44 verbunden, beispielsweise durch einen Schlauch oder ein Rohr (nicht gezeigt). Die Absaugeinheit 46 ist dazu vorgesehen, Partikel, Dämpfe und/oder Flüssigkeiten aus den Reinigungsbereichen 22, 24 zu entfernen. Die Absaugeinheit 46 ist dazu vorgesehen, Partikel, Dämpfe und/oder Flüssigkeiten aus dem von der Umhausung 44 umschlossenen Bereich abzusaugen. Die Absaugeinheit 46 ist mit einer Unterseite 90 der Umhausung 44 verbunden. Die Absaugeinheit 46 saugt die Reinigungsbereiche 22, 24 in Vertikalrichtung gesehen von unten ab. Die Wiederaufbereitungseinheit 16 weist einen Abscheider 48 auf. Der Abscheider 48 ist mit der Absaugeinheit 46 verbunden. Der Abscheider 48 bildet eine Teilkomponente der Absaugeinheit 46 aus. Der Abscheider 48 ist dazu vorgesehen, die von der Absaugeinheit 46 abgesaugten Partikel, Dämpfe und/oder Flüssigkeiten zumindest teilweise in deren Bestandteile zu trennen und/oder wiederaufzubereiten.

Die Wiederaufbereitungseinheit 16 umfasst eine Reinigungseinheit 34. Die Reinigungseinheit 34 umfasst den Reinigungsbereich 22 und den weiteren Reinigungsbereich 24. Die Wiederaufbereitungseinheit 16 umfasst eine Konservierungseinheit 36. Die Konservierungseinheit 36 weist einen Konservierungsbereich 38 auf. Die Konservierungseinheit 36 weist einen weiteren Konservierungsbereich 40 auf. Der Konservierungsbereich 38 und der weitere Konservierungsbereich 40 sind direkt aneinandergrenzend angeordnet. Der Konservierungsbereich 38 und der weitere Konservierungsbereich 40 sind entlang einer Horizontalrichtung der Wiederaufbereitungsvorrichtung 54 nebeneinander angeordnet. Der Konservierungsbereich 38 und der weitere Konservierungsbereich 40 gehen, insbesondere barrierefrei, ineinander über. Die Wiederaufbereitungsvorrichtung 54, insbesondere die Wiederaufbereitungseinheit 16, weist eine weitere Umhausung 52 auf. Die weitere Umhausung 52 ist getrennt von der Umhausung 44 ausgebildet. Die weitere Umhausung 52 begrenzt den Konservierungsbereich 38 und den weiteren Konservierungsbereich 40 zu fünf Seiten. Die durch die weitere Umhausung 52 begrenzten Konservierungsbereiche 38, 40 sind lediglich nach oben hin und zu dem jeweiligen anderen benachbarten Konservierungsbereich 38, 40 hin offen. Die Handhabungseinheit 20 ist dazu vorgesehen, mittels einer Bewegung der Halteeinheit 18 entlang der Bewegungsachse 30, das Werkzeug 10, die Werkzeugaufnahme 12 und/oder die Werkzeugeinheit 14 zur Durchführung eines Konservierungsvorgangs, vorzugsweise nacheinander, in die durch die weitere Umhausung 52 umschlossenen Konservierungsbereiche 38, 40 einzutauchen und wieder daraus zu entnehmen. Die Absaugeinheit 46 ist mit der weiteren Umhausung 52 verbunden, beispielsweise durch einen Schlauch oder ein Rohr (nicht gezeigt). Die Absaugeinheit 46 ist dazu vorgesehen, Partikel, Dämpfe und/oder Flüssigkeiten aus den Konservierungsbereichen 38, 40 zu entfernen. Die Absaugeinheit 46 ist dazu vorgesehen, Partikel, Dämpfe und/oder Flüssigkeiten aus dem von der weiteren Umhausung 52 umschlossenen Bereich abzusaugen. Die Absaugeinheit 46 ist mit einer Unterseite 92 der weiteren Umhausung 52 verbunden. Die Absaugeinheit 46 saugt die Konservierungsbereiche 38, 40 in Vertikalrichtung gesehen von unten ab. Die Konservierungsbereiche 38, 40 sind in einer Horizontalrichtung der Wiederaufbereitungsvorrichtung 54 neben den Reinigungsbereichen 22, 24 angeordnet. Die Konservierungsbereiche 38, 40 sind getrennt von den Reinigungsbereichen 22, 24 angeordnet.

Die Wiederaufbereitungsvorrichtung 54, insbesondere die Handhabungseinheit 20, weist eine weitere Bewegungsachse 32 auf. Die weitere Bewegungsachse 32 ist eine horizontale Bewegungsachse. Die weitere Bewegungsachse 32 verläuft senkrecht zu der Bewegungsachse 30. Die von der Halteeinheit 18 gehalterte und/oder gegriffene Werkzeugeinheit 14, das von der Halteeinheit 18 gehalterte und/oder gegriffene Werkzeug 10 und/oder die von der Halteeinheit 18 gehalterte und/oder gegriffene Werkzeugaufnahme 12 ist mittels der Handhabungseinheit 20 entlang der weiteren Bewegungsachse 32 automatisiert bewegbar. Die Handhabungseinheit 20 umfasst einen entlang der weiteren Bewegungsachse 32 horizontal beweglich gelagerten Schlitten 94. Der Turm 86 ist auf dem Schlitten 94 montiert. Der Turm 86 ist mittels des Schlittens 94 horizontal entlang der weiteren Bewegungsachse 32 bewegbar. Dadurch ist die Halteeinheit 18 von der Handhabungseinheit 20 in die Horizontalrichtung und in die Vertikalrichtung bewegbar gelagert. Der Reinigungsbereich 22 und der weitere Reinigungsbereich 24 sind entlang der weiteren Bewegungsachse 32 nebeneinander angeordnet. Der Konservierungsbereich 38 und der weitere Konservierungsbereich 40 sind entlang der weiteren Bewegungsachse 32 nebeneinander angeordnet. Die Konservierungsbereiche 38, 40 sind entlang der weiteren Bewegungsachse 32 neben den Reinigungsbereichen 22, 24 angeordnet. Die Wiederaufbereitungsvorrichtung 54 weist eine Steuer- und/oder Regeleinheit 106 auf. Die Steuer- und/oder Regeleinheit 106 ist zu einer (CNC-)Steuerung der Handhabungseinheit 20 vorgesehen, insbesondere der Bewegung der Halteeinheit 18 entlang der Bewegungsachsen 30, 32. Die Steuer- und/oder Regeleinheit 106 ist zu einer Steuerung der Absaugeinheit 46 vorgesehen.

Die Fig. 3 zeigt eine schematische perspektivische Detailansicht der Halteeinheit 18. Die Halteeinheit 18 umfasst eine Greifereinheit 26. Die Greifereinheit 26 ist dazu vorgesehen, die Werkzeugeinheit 14, das Werkzeug 10 und/oder die Werkzeugaufnahme 12 zu greifen. Die Greifereinheit 26 umfasst mehrere Greiferelemente 96. Die Greiferelemente 96 sind auf einer in Vertikalrichtung gesehen unteren Seite der Greifereinheit 26 angeordnet. Die Greiferelemente 96 sind auf einer zu den Reinigungsbereichen 22, 24 hinweisenden Seite der Greifereinheit 26 angeordnet. Die in der Fig. 3 beispielhaft dargestellte Greifereinheit 26 umfasst drei Greiferelemente 96. Die Greifereinheit 26 ist dazu vorgesehen, je nach Ausgestaltung des zu greifenden Werkzeugs 10 oder der zu greifenden Werkzeugaufnahme 12 wahlweise das Werkzeug 10 / die Werkzeugaufnahme 12 entlang einer äußeren Umfangsrichtung des Werkzeugs 10 / der Werkzeugaufnahme 12 mit den Greiferelementen 96 zu greifen (dies ist bei den meisten Werkzeugen 10 der Fall) oder entlang einer inneren Umfangsrichtung einer Ausnehmung des Werkzeugs 10 / der Werkzeugaufnahme 12 mit den Greiferelementen 96 zu greifen (dies ist bei den meisten Werkzeugaufnahmen 12 der Fall). In der Fig. 1 ist beispielhaft dargestellt, wie die Greiferelemente 96 in eine Ausnehmung einer Werkzeugaufnahme 12 eingreifen und dadurch die Werkzeugaufnahme 12 haltern. Die Greiferelemente 96 sind relativ zu einer gemeinsamen Zentralachse 98 radialbeweglich gelagert. Die Greiferelemente 96 weisen auf einer radial nach innen gewandten Seite innere Greifkonturen 100 auf. Die inneren Greifkonturen 100 sind zu einer Halterung eines Werkzeugs 10 oder einer Werkzeugaufnahme 12 durch einen radial nach innen wirkenden und von der Greifereinheit 26 erzeugten Druck vorgesehen. Die Greiferelemente 96 weisen auf einer radial nach außen gewandten Seite äußere Greifkonturen 102 auf. Die äußeren Greifkonturen 102 sind zu einer Halterung eines Werkzeugs 10 oder einer Werkzeugaufnahme 12 durch einen radial nach außen wirkenden und von der Greifereinheit 26 erzeugten Druck vorgesehen. Die Greifkonturen 100, 102 sind an bekannte Außen- oder Innenmaße von Werkzeugen 10 und Werkzeugaufnahmen 12 angepasst. Die Greiferelemente 96 der Greifereinheit 26 sind einfach austauschbar ausgebildet (siehe lösbare Schrauben in Fig. 3). Dadurch kann vorteilhaft die Greifereinheit 26 flexibel an verschiedene Werkzeuge 10 und/oder Werkzeugaufnahmen 12 angepasst werden. Die Greifereinheit 26 weist eine Greiferbasis 104 auf. Die Greiferelemente 96 sind (austauschbar) an der Greiferbasis 104 montierbar. Die Greifereinheit 26, insbesondere zumindest die Greiferbasis 104 mit den Greiferelementen 96, ist rotierbar. Die Greifereinheit 26, insbesondere zumindest die Greiferbasis 104 mit den Greiferelementen 96, ist um die zu der Zentralachse 98 parallele Rotationsachse 88, vorzugsweise um die Zentralachse 98, rotierbar. Die Steuer- und/oder Regeleinheit 106 ist zu einer (CNC-)Steuerung der Greifereinheit 26, insbesondere der Rotation der Greifereinheit 26 und/oder der Bewegung der Greiferelemente 96, vorgesehen.

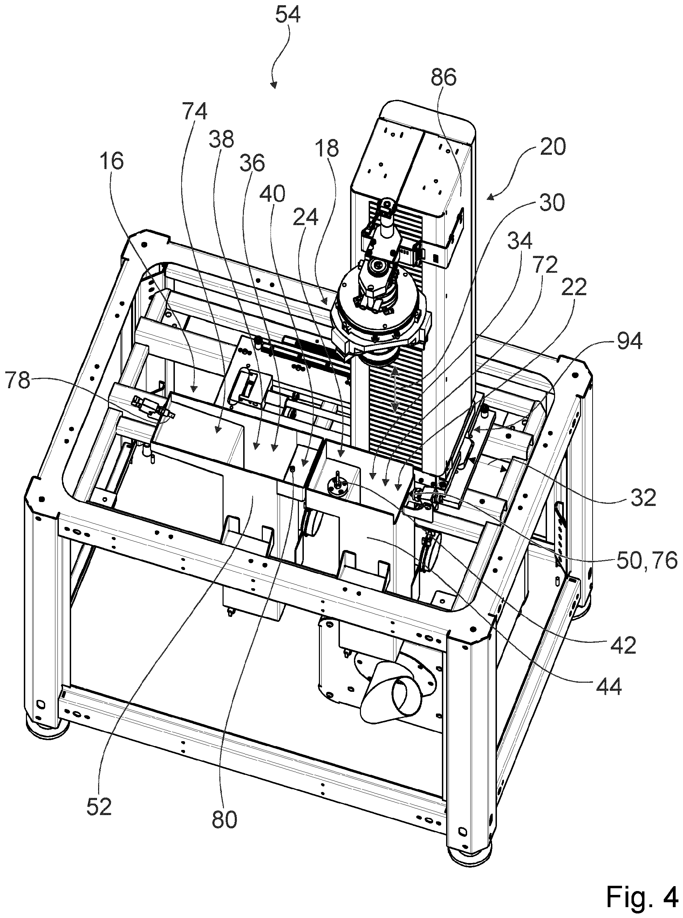

Die Fig. 4 zeigt schematisch einen vergrößerten perspektivisch dargestellten Ausschnitt der Wiederaufbereitungsvorrichtung 54 mit den Reinigungsbereichen 22, 24 und mit den Konservierungsbereichen 38, 40. Die Reinigungsbereiche 22, 24 der Wiederaufbereitungseinheit 16 sind zu einer Dampfreinigung der Werkzeuge 10, der Werkzeugaufnahmen 12 und/oder der Werkzeugeinheiten 14 vorgesehen. Der Reinigungsbereich 22 ist dabei zu einer Dampfreinigung von Außenseiten der Werkzeuge 10, der Werkzeugaufnahmen 12 und/oder der Werkzeugeinheiten 14 vorgesehen, während der weitere Reinigungsbereich 24 zu einer Dampfreinigung von Innenseiten (z.B. Ausnehmungen wie Werkzeugaufnahmeöffnungen oder Werkzeugaufnahmebereichen) von Werkzeugaufnahmen 12 vorgesehen ist. Die Reinigungseinheit 34 umfasst eine Reinigungsvorrichtung 72. Die Reinigungsvorrichtung 72 ist dazu vorgesehen, Reinigungsdampf auf die Werkzeuge 10, die Werkzeugaufnahmen 12 und/oder die Werkzeugeinheiten 14 aufzubringen. Die Reinigungsvorrichtung 72 weist eine Reinigungsdüse 76 auf. Die Reinigungsdüse 76 ist zumindest teilweise in dem Reinigungsbereich 22 angeordnet. Die Reinigungsdüse 76 ist zumindest teilweise außerhalb des Reinigungsbereichs 22 angeordnet. Die Reinigungsdüse 76 ist in Richtung des Reinigungsbereichs 22 ausgerichtet. Die Reinigungsdüse 76 ist dazu vorgesehen, Reinigungsdampf in den Reinigungsbereich 22 einzublasen. Die Reinigungsdüse 76 ist dazu vorgesehen, Reinigungsdampf seitlich in den Reinigungsbereich 22 einzublasen. Die Reinigungsdüse 76 ist zumindest im Wesentlichen senkrecht zu der Bewegungsachse 30 angeordnet. Die Reinigungsdüse 76 ist zumindest im Wesentlichen parallel zu der weiteren Bewegungsachse 32 angeordnet. Die Reinigungsvorrichtung 72 weist eine Reinigungslanze 42 auf. Die Reinigungslanze 42 ist, insbesondere vollständig, in dem weiteren Reinigungsbereich 24 angeordnet. Der weitere Reinigungsbereich 24 weist die Reinigungslanze 42 auf. Die Reinigungslanze 42 ist dazu vorgesehen, Reinigungsdampf in den weiteren Reinigungsbereich 24 einzublasen. Die Reinigungslanze 42 ist dazu vorgesehen, den Reinigungsdampf in einer um die Reinigungslanze 42 umlaufende Radialrichtung auszugeben. Die Reinigungslanze 42 ist dazu vorgesehen, bei dem Reinigungsvorgang an der Werkzeugaufnahme 12 zumindest teilweise in die Innenseiten der Werkzeugaufnahme 12, insbesondere in eine Werkzeugaufnahmeöffnung (nicht gezeigt) der Werkzeugaufnahme 12, einzugreifen. Die Reinigungslanze 42 ist zu einer Reinigung von Innenräumen der Werkzeugaufnahme 12 vorgesehen. Die Handhabungseinheit 20 ist dazu vorgesehen, die Werkzeugaufnahme 12 mittels einer Bewegung entlang der Bewegungsachse 30 über die Reinigungslanze 42 zu stülpen.

Die Konservierungsbereiche 38, 40 der Wiederaufbereitungseinheit 16 sind zu einer Konservierung der gereinigten Werkzeuge 10, Werkzeugaufnahmen 12 und/oder Werkzeugeinheiten 14 durch ein Besprühen der Werkzeuge 10, der Werkzeugaufnahmen 12 und/oder der Werkzeugeinheiten 14 mit einer Konservierungsflüssigkeit vorgesehen. Die Konservierungsflüssigkeit ist als ein Ölnebel ausgebildet. Der Konservierungsbereich 38 ist dabei zu einer Ölnebel-Konservierung der zuvor gereinigten Außenseiten der Werkzeuge 10, der Werkzeugaufnahmen 12 und/oder der Werkzeugeinheiten 14 vorgesehen, während der weitere Konservierungsbereich 40 zu einer Ölnebel-Konservierung der zuvor gereinigten Innenseiten der Werkzeugaufnahmen 12 vorgesehen ist. Die Konservierungseinheit 36 umfasst eine Konservierungsvorrichtung 74. Die Konservierungsvorrichtung 74 ist dazu vorgesehen, die Konservierungsflüssigkeit auf die Werkzeuge 10, die Werkzeugaufnahmen 12 und/oder die Werkzeugeinheiten 14 aufzubringen. Die Konservierungsvorrichtung 74 weist eine Düse 50 auf, welche zumindest im Wesentlichen parallel zu der Bewegungsachse 30 ausgerichtet ist. Die Düse 50 ist als eine Konservierungsdüse 78 ausgebildet. Die Konservierungsvorrichtung 74 weist die Konservierungsdüse 78 auf. Die Konservierungsdüse 78 ist zumindest teilweise in dem Konservierungsbereich 38 angeordnet. Die Konservierungsdüse 78 ist zumindest teilweise außerhalb des Konservierungsbereichs 38 angeordnet. Die Konservierungsdüse 78 ist in Richtung des Konservierungsbereichs 38 ausgerichtet. Die Konservierungsdüse 78 ist dazu vorgesehen, den Ölnebel in den Konservierungsbereich 38 einzublasen. Die Konservierungsdüse 78 ist dazu vorgesehen, den Ölnebel seitlich in den Konservierungsbereich 38 einzublasen. Die Konservierungsdüse 78 ist zumindest im Wesentlichen senkrecht zu der Bewegungsachse 30 angeordnet. Die Konservierungsdüse 78 ist zumindest im Wesentlichen parallel zu der weiteren Bewegungsachse 32 angeordnet. Die Konservierungsvorrichtung 74 weist eine weitere Konservierungsdüse 80 auf. Die weitere Konservierungsdüse 80 ist, insbesondere vollständig, in dem weiteren Konservierungsbereich 40 angeordnet. Der weitere Konservierungsbereich 40 weist die weitere Konservierungsdüse 80 auf. Die weitere Konservierungsdüse 80 ist dazu vorgesehen, die Konservierungsflüssigkeit in den weiteren Konservierungsbereich 40 einzublasen. Die weitere Konservierungsdüse 80 ist dazu vorgesehen, die Konservierungsflüssigkeit von unten in den weiteren Konservierungsbereich 40 einzublasen. Die weitere Konservierungsdüse 80 ist dazu vorgesehen, bei dem Konservierungsvorgang der Werkzeugaufnahme 12 die Konservierungsflüssigkeit in die Innenseiten der Werkzeugaufnahme 12, insbesondere in die Werkzeugaufnahmeöffnung (nicht gezeigt) der Werkzeugaufnahme 12, einzusprühen. Die weitere Konservierungsdüse 80 ist zu einer Konservierung von in Innenräumen der Werkzeugaufnahme 12 liegenden Oberflächen vorgesehen. Die Handhabungseinheit 20 ist dazu vorgesehen, die Werkzeugaufnahme 12, insbesondere die Werkzeugaufnahmeöffnung der Werkzeugaufnahme 12, mittels einer Bewegung entlang der Bewegungsachsen 30, 32 über der weiteren Konservierungsdüse 80 zu positionieren.

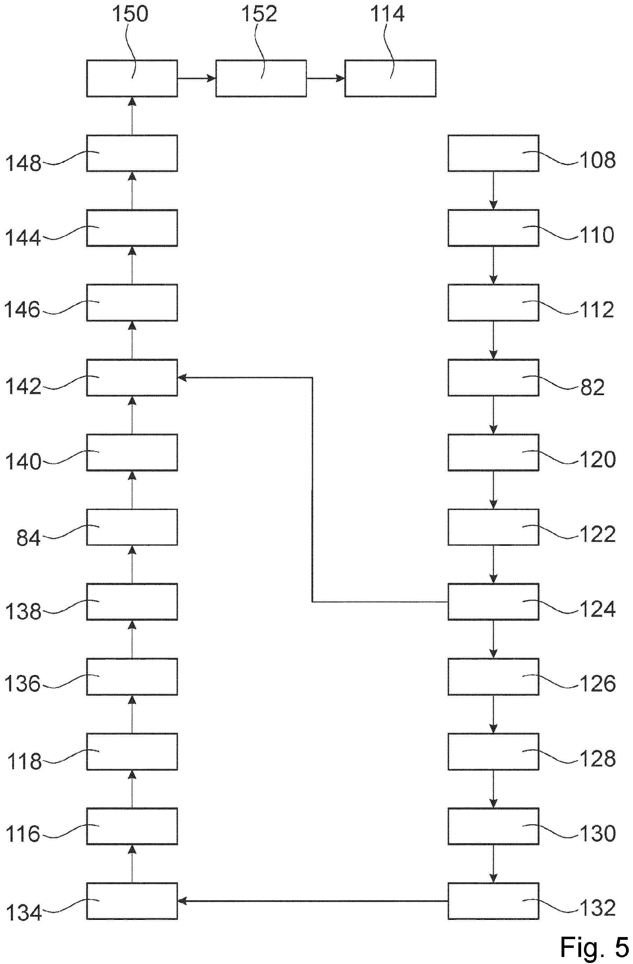

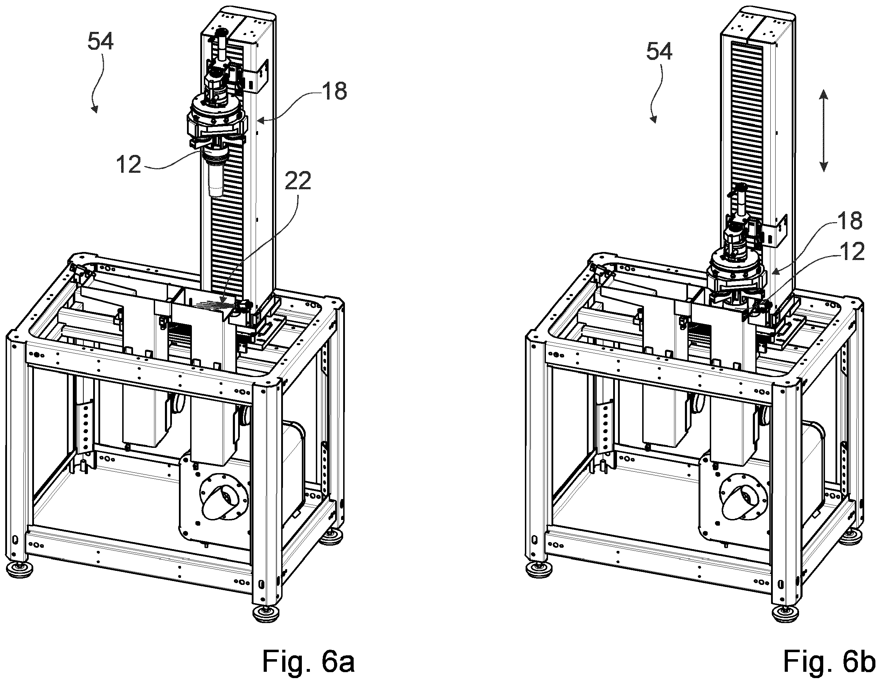

Die Fig. 5 zeigt ein schematisches Ablaufdiagramm eines Verfahrens zur Wiederaufbereitung, insbesondere zur Reinigung und/oder Konservierung, der Werkzeuge 10, Werkzeugaufnahmen 12 und/oder Werkzeugeinheiten 14 mittels der Wiederaufbereitungsvorrichtung 54. Die einzelnen Verfahrensschritte des Verfahrens zur Wiederaufbereitung sind zusätzlich in den Figuren 6a bis 6h veranschaulicht. In zumindest einem Verfahrensschritt 108 wird ein Werkzeug 10, eine Werkzeugaufnahme 12 oder eine Werkzeugeinheit 14 in der Halteeinheit 18 befestigt. In den Figuren 6a bis 6h ist beispielhaft eine Reinigung und Konservierung einer Werkzeugaufnahme 12 dargestellt. Die Werkzeugaufnahme 12 wird in dem Verfahrensschritt 108 mit einer Ausrichtung der Werkzeugaufnahmeöffnung nach unten, d.h. in Richtung der Reinigungseinheit 34, in der Halteeinheit 18 befestigt (vgl. Fig. 6a). In zumindest einem weiteren Verfahrensschritt 110 wird die Halteeinheit 18 zusammen mit der Werkzeugaufnahme 12 entlang der Bewegungsachse 30 nach unten in den Reinigungsbereich 22 hinein bewegt (vgl. Fig. 6b). In zumindest einem Reinigungsschritt 112 wird die Reinigungsdüse 76 der Reinigungsvorrichtung 72 aktiviert. In dem Reinigungsschritt 112 wird der Reinigungsdampf auf die Außenseite der Werkzeugaufnahme 12 gesprüht. In zumindest einem weiteren Reinigungsschritt 82 wird bei aktivierter Reinigungsdüse 76 die Werkzeugaufnahme 12 von der Halteeinheit 18 bewegt. Die Halteeinheit 18 wird während des Reinigungsschritts 82 auf- und abbewegt. Die Halteeinheit 18 wird zudem optional während des Reinigungsschritts 82 rotiert. In zumindest einem weiteren Verfahrensschritt 120 wird die Reinigungsdüse 76 deaktiviert. In zumindest einem weiteren Verfahrensschritt 122 wird die Werkzeugaufnahme 12 aus dem Reinigungsbereich 22 herausbewegt.

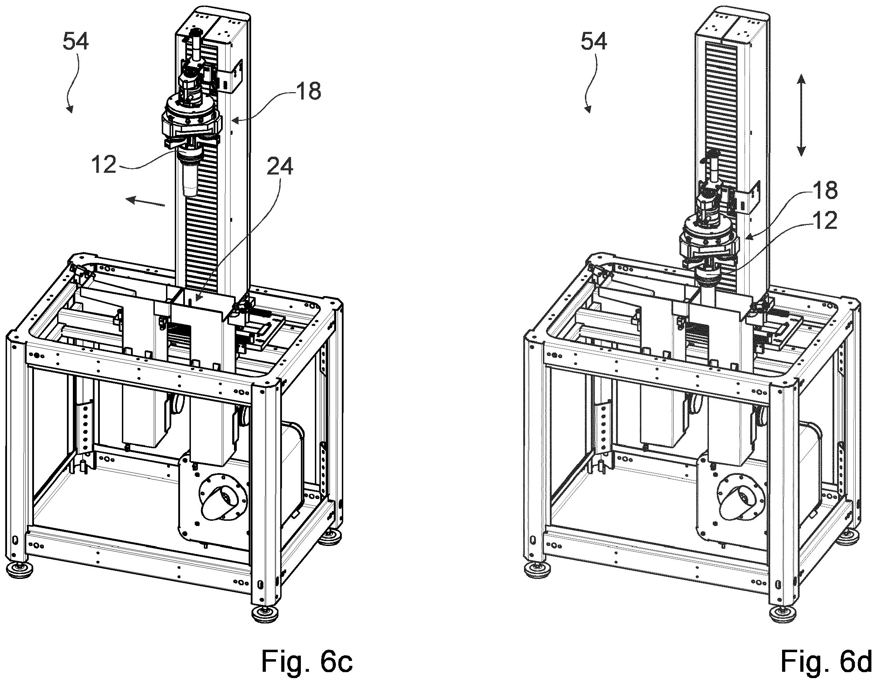

In zumindest einem weiteren Verfahrensschritt 124 wird die Halteeinheit 18 entlang der weiteren Bewegungsachse 32 bewegt, bis die Werkzeugaufnahme 12 oberhalb des weiteren Reinigungsbereichs 24 positioniert ist (vgl. Fig 6c). In zumindest einem weiteren Verfahrensschritt 126 wird die Reinigungslanze 42 aktiviert. In zumindest einem weiteren Verfahrensschritt 128 wird die Werkzeugaufnahme 12 von der Handhabungseinheit 20 abgesenkt, bis eine Werkzeugaufnahmeöffnung der Werkzeugaufnahme 12 über die Reinigungslanze 42 gestülpt ist. In dem Verfahrensschritt 128 wird die Werkzeugaufnahme 12 in den weiteren Reinigungsbereich 24 verbracht (vgl. Fig. 6d). In dem Verfahrensschritt 128 wird die Reinigungslanze 42 in ein Inneres einer Ausnehmung der Werkzeugaufnahme 12 eingeführt. In zumindest einem weiteren Reinigungsschritt 130 wird Reinigungsdampf in das Innere der Werkzeugaufnahme 12 gesprüht. In zumindest einem weiteren Reinigungsschritt 132 wird bei aktivierter Reinigungslanze 42 die Werkzeugaufnahme 12 von der Halteeinheit 18 bewegt. Die Halteeinheit 18 wird während des Reinigungsschritts 132 auf- und abbewegt. Die Halteeinheit 18 wird zudem optional während des Reinigungsschritts 132 rotiert. In zumindest einem weiteren Verfahrensschritt 134 wird die Werkzeugaufnahme 12 aus dem weiteren Reinigungsbereich 24 herausbewegt. Die den weiteren Reinigungsbereich 24 betreffenden Verfahrensschritte 126, 128, 134 und Reinigungsschritte 130, 132 können im Fall einer Reinigung von Werkzeugen 10 oder Werkzeugeinheiten 14 übersprungen werden. Zwischen dem Reinigungsschritt 82 und einem darauffolgenden Konservierungsschritt 84 wird die Werkzeugaufnahme 12 von einem der Reinigungsbereiche 22, 24 in einen der Konservierungsbereiche 38, 40 verbracht.

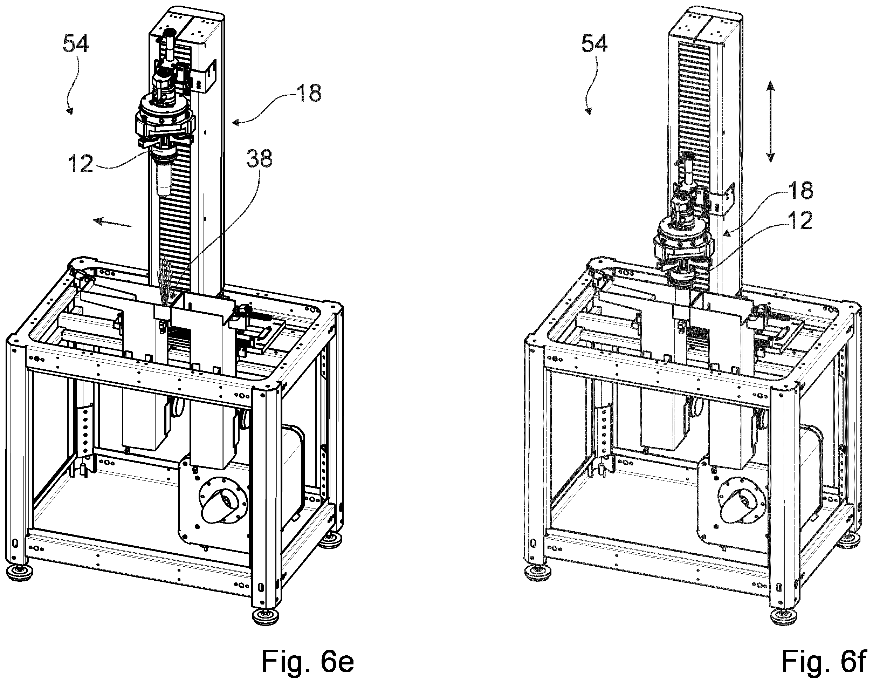

In zumindest einem weiteren Verfahrensschritt 116 wird die Halteeinheit 18 entlang der weiteren Bewegungsachse 32 bewegt, bis die Werkzeugaufnahme 12 oberhalb des weiteren Konservierungsbereichs 40 positioniert ist (vgl. Fig. 6e). In zumindest einem weiteren Verfahrensschritt 118 wird die weitere Konservierungsdüse 80 der Konservierungsvorrichtung 74 aktiviert. In zumindest einem weiteren Verfahrensschritt 136 wird die Werkzeugaufnahme 12 von der Handhabungseinheit 20 abgesenkt, bis eine Werkzeugaufnahmeöffnung der Werkzeugaufnahme 12 in einem Nahbereich über der weiteren Konservierungsdüse 80 positioniert ist und bis die Werkzeugaufnahme 12 zumindest teilweise in dem weiteren Konservierungsbereich 40 angeordnet ist. In dem Verfahrensschritt 136 wird die Werkzeugaufnahme 12 in den weiteren Konservierungsbereich 40 verbracht (vgl. Fig. 6f). In zumindest einem Konservierungsschritt 138 wird Ölnebel in das Innere der Werkzeugaufnahme 12 gesprüht. In dem zumindest einen weiteren Konservierungsschritt 84 wird bei aktivierter weiterer Konservierungsdüse 80 die Werkzeugaufnahme 12 von der Halteeinheit 18 bewegt. Die Halteeinheit 18 wird während des Konservierungsschritt 84s auf- und abbewegt. Die Halteeinheit 18 wird zudem optional während des Konservierungsschritts 84 rotiert. In zumindest einem weiteren Verfahrensschritt 140 wird die Werkzeugaufnahme 12 aus dem weiteren Konservierungsbereich 40 herausbewegt. Die den weiteren Konservierungsbereich 40 betreffenden Verfahrensschritte 118, 136, 140 und Konservierungsschritte 84, 138 können im Fall einer Konservierung von Werkzeugen 10 oder Werkzeugeinheiten 14 übersprungen werden.

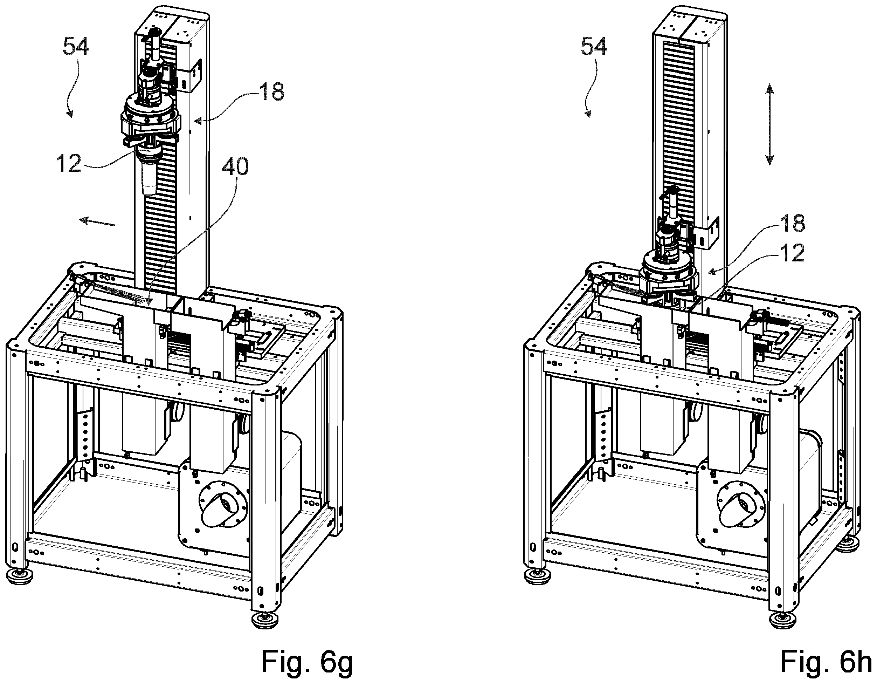

In zumindest einem weiteren Verfahrensschritt 142 wird die Halteeinheit 18 entlang der weiteren Bewegungsachse 32 bewegt, bis die Werkzeugaufnahme 12 oberhalb des Konservierungsbereichs 38 positioniert ist (vgl. Fig. 6g). In zumindest einem weiteren Verfahrensschritt 146 wird die Werkzeugaufnahme 12 von der Handhabungseinheit 20 abgesenkt bis die Werkzeugaufnahme 12 zumindest teilweise in dem Konservierungsbereich 38 versenkt ist. In dem Verfahrensschritt 146 wird die Werkzeugaufnahme 12 in den Konservierungsbereich 38 verbracht (vgl. Fig. 6h). In zumindest einem weiteren Konservierungsschritt 144 wird die Konservierungsdüse 78 der Konservierungsvorrichtung 74 aktiviert. In dem Konservierungsschritt 144 wird der Ölnebel auf die Außenseite der Werkzeugaufnahme 12 gesprüht. In zumindest einem weiteren Konservierungsschritt 148 wird bei aktivierter Konservierungsdüse 78 die Werkzeugaufnahme 12 von der Halteeinheit 18 bewegt. Die Halteeinheit 18 wird während des Konservierungsschritt s148 auf- und abbewegt. Die Halteeinheit 18 wird zudem optional während des Konservierungsschritts 148 rotiert. In zumindest einem weiteren Verfahrensschritt 150 wird die Konservierungsdüse 78 deaktiviert. In zumindest einem weiteren Verfahrensschritt 152 wird die Werkzeugaufnahme 12 aus dem Konservierungsbereich 38 herausbewegt. In dem zumindest einen weiteren Verfahrensschritt 152 wird die gereinigte und konservierte Werkzeugaufnahme 12 von der Handhabungseinheit 20 in eine Entnahmeposition verbracht. In zumindest einem weiteren Verfahrensschritt 114 wird die gereinigte und konservierte Werkzeugaufnahme 12 aus der Wiederaufbereitungsvorrichtung 54 entnommen.

### Bezugszeichen

- 10: Werkzeug
- 12: Werkzeugaufnahme
- 14: Werkzeugeinheit
- 16: Wiederaufbereitungseinheit
- 18: Halteeinheit
- 20: Handhabungseinheit
- 22: Reinigungsbereich
- 24: Weiterer Reinigungsbereich
- 26: Greifereinheit
- 28: Oberseite
- 30: Bewegungsachse
- 32: Weitere Bewegungsachse
- 34: Reinigungseinheit
- 36: Konservierungseinheit
- 38: Konservierungsbereich
- 40: Weiterer Konservierungsbereich
- 42: Reinigungslanze
- 44: Umhausung
- 46: Absaugeinheit
- 48: Abscheider
- 50: Düse
- 52: Weitere Umhausung
- 54: Wiederaufbereitungsvorrichtung
- 56: System
- 58: Handhabungsroboter
- 60: Werkzeugeinspanngerät
- 62: Mess- und/oder Einstellgerät
- 64: Schrumpfspanngerät
- 66: Kühlgerät
- 68: Werkzeugmontagegerät
- 70: Wuchtstation
- 72: Reinigungsvorrichtung
- 74: Konservierungsvorrichtung
- 76: Reinigungsdüse
- 78: Konservierungsdüse
- 80: Weitere Konservierungsdüse
- 82: Reinigungsschritt
- 84: Konservierungsschritt
- 86: Turm
- 88: Rotationsachse
- 90: Unterseite
- 92: Unterseite
- 94: Schlitten
- 96: Greiferelement
- 98: Zentralachse
- 100: Greifkontur
- 102: Greifkontur
- 104: Greiferbasis
- 106: Steuer- und/oder Regeleinheit
- 108: Verfahrensschritt
- 110: Verfahrensschritt
- 112: Reinigungsschritt
- 114: Verfahrensschritt
- 116: Verfahrensschritt
- 118: Verfahrensschritt
- 120: Verfahrensschritt
- 122: Verfahrensschritt
- 124: Verfahrensschritt
- 126: Verfahrensschritt
- 128: Verfahrensschritt
- 130: Reinigungsschritt
- 132: Reinigungsschritt
- 134: Verfahrensschritt
- 136: Verfahrensschritt
- 138: Konservierungsschritt
- 140: Verfahrensschritt
- 142: Verfahrensschritt
- 144: Konservierungsschritt
- 146: Verfahrensschritt
- 148: Konservierungsschritt
- 150: Verfahrensschritt
- 152: Verfahrensschritt
- 154: Weiteres Werkzeugeinspanngerät

## Patentansprüche

1. Wiederaufbereitungsvorrichtung (54), insbesondere Reinigungs- und/oder Konservierungsvorrichtung, für Werkzeuge (10), Werkzeugaufnahmen (12) und/oder Werkzeugeinheiten (14), mit zumindest einer Wiederaufbereitungseinheit (16), insbesondere zu einer Wiederaufbereitung gebrauchter und/oder verschmutzter Werkzeuge (10), Werkzeugaufnahmen (12) und/oder Werkzeugeinheiten (14), mit zumindest einer Halteeinheit (18) zu einer auswechselbaren Halterung der Werkzeuge (10), Werkzeugaufnahmen (12) und/oder Werkzeugeinheiten (14) und mit zumindest einer Handhabungseinheit (20), welche dazu vorgesehen ist,
die Halteeinheit (18) und zumindest einen Reinigungsbereich (22) der Wiederaufbereitungseinheit (16) zur Durchführung eines Reinigungsvorgangs an den Werkzeugen (10), Werkzeugaufnahmen (12) und/oder Werkzeugeinheiten (14) zumindest teilautomatisiert zueinander zu führen und
die Halteeinheit (18) und den Reinigungsbereich (22) der Wiederaufbereitungseinheit (16) nach einer Durchführung des Reinigungsvorgangs zumindest teilautomatisiert wieder voneinander zu entfernen
und/oder die Halteeinheit (18) und zumindest einen weiteren Reinigungsbereich (24) der Wiederaufbereitungseinheit (16) nach der Durchführung des Reinigungsvorgangs zur Durchführung eines weiteren Reinigungsvorgangs zueinander zu führen, wobei die Wiederaufbereitungseinheit (16) zumindest eine Reinigungseinheit (34) mit einem oder mehreren Reinigungsbereichen (22, 24) und zumindest eine Konservierungseinheit (36) mit zumindest einem oder mehreren Konservierungsbereichen (38, 40) aufweist, **dadurch gekennzeichnet, dass** der Konservierungsbereich (38) der Wiederaufbereitungseinheit (16) zumindest zu einer Konservierung von Werkzeugen (10), Werkzeugaufnahmen (12) und/oder Werkzeugeinheiten (14) durch ein Besprühen der Werkzeuge (10), Werkzeugaufnahmen (12) und/oder Werkzeugeinheiten (14) mit einer Konservierungsflüssigkeit, vorzugsweise mit einem Ölnebel, vorgesehen ist, wobei
die Wiederaufbereitungseinheit (16) zumindest einen weiteren Konservierungsbereich (40) aufweist, welcher zumindest zu einer Konservierung von Innenseiten von Werkzeugaufnahmen (12) vorgesehen ist, und wobei
der weitere Konservierungsbereich (40) eine Düse (50) aufweist, welche zumindest im Wesentlichen parallel zu einer, insbesondere vertikalen, Bewegungsachse (30) der von der Halteeinheit (18) gehalterten und/oder gegriffenen Werkzeugaufnahme (12) ausgerichtet ist.

2. Wiederaufbereitungsvorrichtung (54) nach Anspruch 1, **dadurch gekennzeichnet, dass** die Handhabungseinheit (20) dazu vorgesehen ist, die Werkzeuge (10), die Werkzeugaufnahmen (12) und/oder die Werkzeugeinheiten (14) zumindest teilautomatisiert durch eine Bewegung der Halteeinheit (18) in den Reinigungsbereich (22) der Wiederaufbereitungseinheit (16) zu verbringen und nach Durchführung des Reinigungsvorgangs zumindest teilautomatisiert wieder aus dem Reinigungsbereich (22) der Wiederaufbereitungseinheit (16) zu entfernen und/oder das Werkzeug (10), die Werkzeugaufnahme (12) und/oder die Werkzeugeinheit (14) nach Durchführung des Reinigungsvorgangs zumindest teilautomatisiert in den weiteren Reinigungsbereich (24) der Wiederaufbereitungseinheit (16) zur Durchführung des weiteren Reinigungsvorgangs zu verbringen.

3. Wiederaufbereitungsvorrichtung (54) nach Anspruch 1 oder 2, **dadurch gekennzeichnet, dass** die Halteeinheit (18) zumindest eine Greifereinheit (26) umfasst, welche dazu vorgesehen ist, eine Werkzeugeinheit (14), ein Werkzeug (10) und/oder eine Werkzeugaufnahme (12) zu greifen.

4. Wiederaufbereitungsvorrichtung (54) nach einem der vorhergehenden Ansprüche, **dadurch gekennzeichnet, dass** die Halteeinheit (18) dazu vorgesehen ist, eine Werkzeugeinheit (14), ein Werkzeug (10) und/oder eine Werkzeugaufnahme (12) derart zu haltern und/oder zu greifen, dass eine Oberseite (28) des Werkzeugs (10), der Werkzeugaufnahme (12) und/oder der Werkzeugeinheit (14) in Richtung des Reinigungsbereichs (22, 24) zeigt.

5. Wiederaufbereitungsvorrichtung (54) nach einem der vorhergehenden Ansprüche, **dadurch gekennzeichnet, dass** die Handhabungseinheit (20) dazu vorgesehen ist, eine Werkzeugeinheit (14), ein Werkzeug (10) und/oder eine Werkzeugaufnahme (12), welche/welches von der Halteeinheit (18) gehaltert und/oder gegriffen ist, relativ zu der Wiederaufbereitungseinheit (16) zu rotieren.

6. Wiederaufbereitungsvorrichtung (54) nach einem der vorhergehenden Ansprüche, **gekennzeichnet durch** zumindest eine, insbesondere vertikale, Bewegungsachse (30), an der entlang eine von der Halteeinheit (18) gehalterte und/oder gegriffene Werkzeugeinheit (14), ein von der Halteeinheit (18) gehaltertes und/oder gegriffenes Werkzeug (10) und/oder eine von der Halteeinheit (18) gehalterte und/oder gegriffene Werkzeugaufnahme (12) zumindest teilautomatisiert bewegbar ist.

7. Wiederaufbereitungsvorrichtung (54) nach Anspruch 6, **gekennzeichnet durch** zumindest eine weitere, insbesondere horizontale, Bewegungsachse (32) entlang der eine von der Halteeinheit (18) gehalterte und/oder gegriffene Werkzeugeinheit (14), ein von der Halteeinheit (18) gehaltertes und/oder gegriffenes Werkzeug (10) und/oder eine von der Halteeinheit (18) gehalterte und/oder gegriffene Werkzeugaufnahme (12) zumindest teilautomatisiert in einer zu der, insbesondere vertikalen, Bewegungsachse (30) senkrechten Richtung bewegbar ist.

8. Wiederaufbereitungsvorrichtung (54) nach einem der vorhergehenden Ansprüche, **dadurch gekennzeichnet, dass** die Handhabungseinheit (20) dazu vorgesehen ist, das Werkzeug (10), die Werkzeugaufnahme (12), die Werkzeugeinheit (14) und/oder die Wiederaufbereitungseinheit (16) während der Durchführung des Reinigungsvorgangs zu bewegen.

9. Wiederaufbereitungsvorrichtung (54) nach einem der vorhergehenden Ansprüche, **dadurch gekennzeichnet, dass** der Reinigungsbereich (22, 24) der Wiederaufbereitungseinheit (16) zumindest zu einer Dampfreinigung von Werkzeugen (10), Werkzeugaufnahmen (12) und/oder Werkzeugeinheiten (14), insbesondere von Außenseiten der Werkzeuge (10), der Werkzeugaufnahmen (12) und/oder der Werkzeugeinheiten (14), vorgesehen ist.

10. Wiederaufbereitungsvorrichtung (54) nach Anspruch 9, **dadurch gekennzeichnet, dass** der weitere Reinigungsbereich (24) der Wiederaufbereitungseinheit (16) zumindest zu einer Reinigung, insbesondere zu einer Dampfreinigung, von Innenseiten von Werkzeugaufnahmen (12) vorgesehen ist.

11. Wiederaufbereitungsvorrichtung (54) nach Anspruch 10, **dadurch gekennzeichnet, dass** der weitere Reinigungsbereich (24) eine Reinigungslanze (42) aufweist, welche dazu vorgesehen ist, bei dem Reinigungsvorgang an den Werkzeugaufnahmen (12) zumindest teilweise in die Innenseiten der Werkzeugaufnahmen (12) einzugreifen.

12. Wiederaufbereitungsvorrichtung (54) nach einem der vorhergehenden Ansprüche, **gekennzeichnet durch** eine Umhausung (44), welche den Reinigungsbereich (22) und insbesondere den weiteren Reinigungsbereich (24) zumindest zu fünf Seiten begrenzt.

13. Wiederaufbereitungsvorrichtung (54) nach einem der vorhergehenden Ansprüche, **dadurch gekennzeichnet, dass** die Wiederaufbereitungseinheit (16) zumindest eine Absaugeinheit (46) aufweist.

14. Wiederaufbereitungsvorrichtung (54) nach einem der vorhergehenden Ansprüche, **dadurch gekennzeichnet, dass** die Wiederaufbereitungseinheit (16) zumindest einen Abscheider (48) aufweist.

15. Wiederaufbereitungsvorrichtung (54) nach Anspruch 12, **gekennzeichnet durch** eine weitere Umhausung (52), welche den Konservierungsbereich (38) und insbesondere den weiteren Konservierungsbereich (40) zumindest zu fünf Seiten begrenzt.

16. Wiederaufbereitungsvorrichtung (54) nach Anspruch 7, **dadurch gekennzeichnet, dass** der Konservierungsbereich (38, 40) entlang der weiteren, insbesondere horizontalen, Bewegungsachse (32) neben dem Reinigungsbereich (22, 24) angeordnet ist.

17. System (56) mit einer Wiederaufbereitungsvorrichtung (54) nach einem der vorhergehenden Ansprüche und mit einem Handhabungsroboter (58) zu einer automatischen Bestückung der Wiederaufbereitungsvorrichtung (54) mit Werkzeugen (10), Werkzeugaufnahmen (12) und/oder Werkzeugeinheiten (14) und/oder zu einer Entnahme von Werkzeugen (10), Werkzeugaufnahmen (12) und/oder Werkzeugeinheiten (14) aus der Wiederaufbereitungsvorrichtung (54) und mit einem oder mehreren Geräten aus der folgenden Liste von Geräten:
- Werkzeugeinspanngerät (60) zu einem zumindest teilautomatisierten Einspannen von Werkzeugen (10) in Werkzeugaufnahmen (12),
- Mess- und/oder Einstellgerät (62) für Werkzeuge (10) zu einem zumindest teilautomatisierten Einstellen und/oder Vermessen von Werkzeugen (10), Werkzeugaufnahmen (12) und/oder Werkzeugeinheiten (14),
- Schrumpfspanngerät (64) zu einem zumindest teilautomatisierten induktiven, thermischen Ein- und/oder Ausspannen von Werkzeugen (10) in und/oder aus Werkzeugaufnahmen (12),
- Kühlgerät (66) zu einem zumindest teilautomatisierten Abkühlen von zuvor erhitzten Werkzeugaufnahmen (12) oder Werkzeugeinheiten (14),
- Werkzeugmontagegerät (68) zu einer zumindest teilautomatisierten Montage von mehrteiligen Werkzeugen (10),
- Wuchtstation (70) zu einem zumindest teilautomatisierten Wuchten von Werkzeugeinheiten (14).

18. Verfahren zur Wiederaufbereitung, insbesondere zur Reinigung und/oder Konservierung, von Werkzeugen (10), Werkzeugaufnahmen (12) und/oder Werkzeugeinheiten (14) mit einer Wiederaufbereitungsvorrichtung (54) nach einem Ansprüche 1 bis 16.

19. Verfahren nach Anspruch 18, **dadurch gekennzeichnet, dass** das Werkzeug (10), die Werkzeugaufnahme (12) und/oder die Werkzeugeinheit (14) in einem Reinigungsschritt (82, 112, 130, 132) und/oder in einem Konservierungsschritt (84, 138, 144, 148) innerhalb zumindest eines der Reinigungsbereiche (22, 24) und/oder der Konservierungsbereiche (38, 40) rotiert und/oder auf und ab bewegt wird.

20. Verfahren nach Anspruch 18 oder 19, **dadurch gekennzeichnet, dass** das Werkzeug (10), die Werkzeugaufnahme (12) und/oder die Werkzeugeinheit (14) zwischen dem Reinigungsschritt (82, 112, 130, 132) und dem Konservierungsschritt (84, 138, 144, 148) von einem der Reinigungsbereiche (22, 24) in einen der Konservierungsbereiche (38, 40) verbracht wird.

## Claims

1. A reprocessing apparatus (54), in particular a cleaning and/or preserving apparatus, for tools (10), tool holders (12) and/or tool units (14), with at least one reprocessing unit (16), in particular for a reprocessing of used and/or contaminated tools (10), tool holders (12) and/or tool units (14), with at least one holding unit (18) for an exchangeable holding of the tools (10), tool holders (12) and/or tool units (14), and with at least one handling unit (20) which is configured for an execution of a cleaning process on the tools (10), tool holders (12) and/or tool units (14), to bring the holding unit (18) and at least one cleaning region (22) of the reprocessing unit (16) together in an at least semiautomated manner, and after execution of the cleaning process, to remove the holding unit (18) and the cleaning region (22) of the reprocessing unit (16) from each other in an at least semiautomated manner,
and/or after execution of the cleaning process, to bring the holding unit (18) and at least one further cleaning region (24) of the reprocessing unit (16) together for an execution of a further cleaning process, wherein the reprocessing unit (16) comprises at least one cleaning unit (34) with one or several cleaning region/s (22, 24) and at least one preserving unit (36) with at least one or several preserving region/s (38, 40), **characterized in that** the preserving region (38) of the reprocessing unit (16) is configured at least for a preserving of tools (10), tool holders (12) and/or tool units (14) by spraying the tools (10), tool holders (12) and/or tool units (14) with a preserving liquid, preferably with an oil mist, wherein the reprocessing unit (16) comprises at least one further preserving region (40), which is configured at least for a preserving of inner sides of tool holders (12), and wherein
the further preserving region (40) comprises a nozzle (50), which is oriented at least substantially parallel to an, in particular vertical, movement axis (30) of the tool holder (12) held and/or gripped by the holding unit (18).

2. The reprocessing apparatus (54) according to claim 1, **characterized in that** the handling unit (20) is configured
to take the tools (10), the tool holders (12) and/or the tool units (14) into the cleaning region (22) of the reprocessing unit (16) in an at least semiautomated manner by a movement of the holding unit (18), and then, after execution of the cleaning process, to remove them from the cleaning region (22) of the reprocessing unit (16) in an at least semiautomated manner, and/or
after execution of the cleaning process, to take the tool (10), the tool holder (12) and/or the tool unit (14) into the further cleaning region (22) of the reprocessing unit (16) in an at least semiautomated manner for an execution of the further cleaning process.

3. The reprocessing apparatus (54) according to claim 1 or 2, **characterized in that** the holding unit (18) comprises at least one gripper unit (26), which is configured for gripping a tool unit (14), a tool (10) and/or a tool holder (12).

4. The reprocessing apparatus (54) according to one of the preceding claims, **characterized in that** the holding unit (18) is configured for holding and/or gripping a tool unit (14), a tool (10) and/or a tool holder (12) in such a way that an upper side (28) of the tool (10), the tool holder (12) and/or the tool unit (14) points towards the cleaning region (22, 24).

5. The reprocessing apparatus (54) according to one of the preceding claims, **characterized in that** the handling unit (20) is configured to rotate a tool unit (14), a tool (10) and/or a tool holder (12), which are/is held and/or gripped by the holding unit (18), relative to the reprocessing unit (16).

6. The reprocessing apparatus (54) according to one of the preceding claims, **characterized by** at least one, in particular vertical, movement axis (30), along which a tool unit (14) held and/or gripped by the holding unit (18), a tool (10) held and/or gripped by the holding unit (18) and/or a tool holder (12) held and/or gripped by the holding unit (18) are/is movable in an at least semiautomated manner.

7. The reprocessing apparatus (54) according to claim 6, **characterized by** at least one further, in particular horizontal, movement axis (32), along which a tool unit (14) held and/or gripped by the holding unit (18), a tool (10) held and/or gripped by the holding unit (18) and/or a tool holder (12) held and/or gripped by the holding unit (18) are/is movable in an at least semiautomated manner in a direction that is perpendicular to the, in particular vertical, movement axis (30).

8. The reprocessing apparatus (54) according to one of the preceding claims, **characterized in that** the handling unit (20) is configured to move the tool (10), the tool holder (12), the tool unit (14) and/or the reprocessing unit (16) during execution of the cleaning process.

9. The reprocessing apparatus (54) according to one of the preceding claims, **characterized in that** the cleaning region (22, 24) of the reprocessing unit (16) is configured at least for a vapor cleaning of tools (10), tool holders (12) and/or tool units (14), in particular of outer sides of the tools (10), the tool holders (12) and/or the tool units (14).

10. The reprocessing apparatus (54) according to claim 9, **characterized in that** the further cleaning region (24) of the reprocessing unit (16) is configured at least for a cleaning, in particular for a vapor cleaning, of inner sides of tool holders (12).

11. The reprocessing apparatus (54) according to claim 10, **characterized in that** the further cleaning region (24) comprises a cleaning lance (42), which is configured, in the cleaning process carried out on the tool holders (12), to engage at least partially into the inner sides of the tool holders (12).

12. The reprocessing apparatus (54) according to one of the preceding claims, **characterized by** an enclosure (44), which delimits the cleaning region (22), and in particular the further cleaning region (24), at least one five sides.

13. The reprocessing apparatus (54) according to one of the preceding claims, **characterized in that** the reprocessing unit (16) comprises at least one suction unit (46).

14. The reprocessing apparatus (54) according to one of the preceding claims, **characterized in that** the reprocessing unit (16) comprises at least one separator (48).

15. The reprocessing apparatus (54) according to claim 12, **characterized by** a further enclosure (52), which delimits the preserving region (38), and in particular the further preserving region (40), at least on five sides.

16. The reprocessing apparatus (54) according to claim 7, **characterized in that** the preserving region (38, 40) is arranged along the further, in particular horizontal, movement axis (32) next to the cleaning region (22, 24).

17. A system (56) with a reprocessing apparatus (54) according to one of the preceding claims, and with a handling robot (58) for an automated loading of the reprocessing apparatus (54) with tools (10), tool holders (12) and/or tool units (14), and/or for a removal of tools (10), tool holders (12) and/or tool units (14) from the reprocessing apparatus (54), and with one or several device/s from the following list of devices:
- tool clamping-in device (60) for an at least semiautomated clamping-in of tools (10) in tool holders (12),
- measuring and/or presetting apparatus (62) for tools (10) for an at least semiautomated presetting and/or measuring of tools (10), tool holders (12) and/or tool units (14),
- shrink-clamping device (64) for an at least semiautomated inductive, thermal clamping-in and/or clamping-out of tools (10) into and/or out of tool holders (12),
- cooling apparatus (66) for an at least semiautomated cooling of previously heated tool holders (12) or tool units (14),
- tool assembly device (68) for an at least semiautomated assembly of multi-part tools (10),
- balancing station (70) for an at least semiautomated balancing of tool units (14).

18. A method for reprocessing, in particular for cleaning and/or preserving, tools (10), tool holders (12) and/or tool units (14) with a reprocessing apparatus (54) according to one of claims 1 to 16.

19. The method according to claim 18, **characterized in that** in a cleaning step (82, 112, 130, 132) and/or in a preserving step (84, 138, 144, 148), the tool (10), the tool holder (12) and/or the tool unit (14) are/is rotated and/or moved up and down within at least one of the cleaning regions (22, 24) and/or of the preserving regions (38, 40).

20. The method according to claim 18 or 19, **characterized in that** between the cleaning step (82, 112, 130, 132) and the preserving step (84, 138, 144, 148), the tool (10), the tool holder (12) and/or the tool unit (14) are/is taken from one of the cleaning regions (22, 24) into one of the preserving regions (38, 40).

## Revendications

1. Dispositif de retraitement (54), en particulier dispositif de nettoyage et/ou de conservation, pour des outils (10), des logements d'outil (12) et/ou des unités d'outil (14), avec au moins une unité de retraitement (16), en particulier pour un retraitement d'outils (10), de logements d'outil (12) et/ou d'unités d'outil (14) usés et/ou souillés, avec au moins une unité de maintien (18) pour un maintien remplaçable des outils (10), des logements d'outil (12) et/ou des unités d'outil (14) et avec au moins une unité de manipulation (20) qui est prévue pour
guider l'unité de maintien (18) et au moins une zone de nettoyage (22) de l'unité de retraitement (16) l'une par rapport à l'autre de manière au moins partiellement automatisée pour la réalisation d'une opération de nettoyage sur les outils (10), les logements d'outil (12) et/ou les unités d'outil (14) et retirer l'unité de maintien (18) et la zone de nettoyage (22) de l'unité de retraitement (16) l'une de l'autre de manière au moins partiellement automatisée après une réalisation de l'opération de nettoyage et/ou guider l'unité de maintien (18) et au moins une autre zone de nettoyage (24) de l'unité de retraitement (16) l'une par rapport à l'autre après la réalisation de l'opération de nettoyage pour la réalisation d'une autre opération de nettoyage, l'unité de retraitement (16) comprenant au moins une unité de nettoyage (34) avec une ou plusieurs zones de nettoyage (22, 24) et au moins
une unité de conservation (36) avec au moins une ou plusieurs zones de conservation (38, 40), **caractérisé en ce que** la zone de conservation (38) de l'unité de retraitement (16) est prévue au moins pour une conservation d'outils (10), de logements d'outil (12) et/ou d'unités d'outil (14) par une pulvérisation des outils (10), des logements d'outil (12) et/ou des unités d'outil (14) avec un liquide de conservation, de préférence avec un brouillard d'huile,
l'unité de retraitement (16) comprenant au moins une autre zone de conservation (40) qui est prévue au moins pour une conservation de côtés intérieurs de logements d'outil (12), et
l'autre zone de conservation (40) comprenant une buse (50) qui est orientée au moins sensiblement parallèlement à un axe de déplacement (30), en particulier vertical, du logement d'outil (12) maintenu et/ou saisi par l'unité de maintien (18).

2. Dispositif de retraitement (54) selon la revendication 1, **caractérisé en ce que** l'unité de manipulation (20) est prévue pour amener les outils (10), les logements d'outil (12) et/ou les unités d'outil (14) dans la zone de nettoyage (22) de l'unité de retraitement (16) de manière au moins partiellement automatisée par un déplacement de l'unité de maintien (18) et pour les retirer de la zone de nettoyage (22) de l'unité de retraitement (16) de manière au moins partiellement automatisée après la réalisation de l'opération de nettoyage et/ou pour amener l'outil (10), le logement d'outil (12) et/ou l'unité d'outil (14) dans l'autre zone de nettoyage (24) de l'unité de retraitement (16) de manière au moins partiellement automatisée après la réalisation de l'opération de nettoyage pour la réalisation de l'autre opération de nettoyage.

3. Dispositif de retraitement (54) selon la revendication 1 ou 2, **caractérisé en ce que** l'unité de maintien (18) comprend au moins une unité de préhension (26) qui est prévue pour saisir une unité d'outil (14), un outil (10) et/ou un logement d'outil (12).

4. Dispositif de retraitement (54) selon l'une quelconque des revendications précédentes, **caractérisé en ce que** l'unité de maintien (18) est prévue pour maintenir et/ou saisir une unité d'outil (14), un outil (10) et/ou un logement d'outil (12) de telle sorte qu'un côté supérieur (28) de l'outil (10), du logement d'outil (12) et/ou de l'unité d'outil (14) est orienté dans la direction de la zone de nettoyage (22, 24).

5. Dispositif de retraitement (54) selon l'une quelconque des revendications précédentes, **caractérisé en ce que** l'unité de manipulation (20) est prévue pour faire tourner une unité d'outil (14), un outil (10) et/ou un logement d'outil (12) qui est maintenu et/ou saisi par l'unité de maintien (18) par rapport à l'unité de retraitement (16).

6. Dispositif de retraitement (54) selon l'une quelconque des revendications précédentes, **caractérisé par** au moins un axe de déplacement (30), en particulier vertical, le long duquel une unité d'outil (14) maintenue et/ou saisie par l'unité de maintien (18), un outil (10) maintenu et/ou saisi par l'unité de maintien (18) et/ou un logement d'outil (12) maintenu et/ou saisi par l'unité de maintien (18) peut être déplacé de manière au moins partiellement automatisée.

7. Dispositif de retraitement (54) selon la revendication 6, **caractérisé par** au moins un autre axe de déplacement (32), en particulier horizontal, le long duquel une unité d'outil (14) maintenue et/ou saisie par l'unité de maintien (18), un outil (10) maintenu et/ou saisi par l'unité de maintien (18) et/ou un logement d'outil (12) maintenu et/ou saisi par l'unité de maintien (18) peut être déplacé de manière au moins partiellement automatisée dans une direction perpendiculaire à l'axe de déplacement (30), en particulier vertical.

8. Dispositif de retraitement (54) selon l'une quelconque des revendications précédentes, **caractérisé en ce que** l'unité de manipulation (20) est prévue pour déplacer l'outil (10), le logement d'outil (12), l'unité d'outil (14) et/ou l'unité de retraitement (16) pendant la réalisation de l'opération de nettoyage.

9. Dispositif de retraitement (54) selon l'une quelconque des revendications précédentes, **caractérisé en ce que** la zone de nettoyage (22, 24) de l'unité de retraitement (16) est prévue au moins pour un nettoyage à la vapeur d'outils (10), de logements d'outil (12) et/ou d'unités d'outil (14), en particulier de côtés extérieurs des outils (10), des logements d'outil (12) et/ou des unités d'outil (14).

10. Dispositif de retraitement (54) selon la revendication 9, **caractérisé en ce que** l'autre zone de nettoyage (24) de l'unité de retraitement (16) est prévue au moins pour un nettoyage, en particulier pour un nettoyage à la vapeur, de côtés intérieurs de logements d'outil (12).

11. Dispositif de retraitement (54) selon la revendication 10, **caractérisé en ce que** l'autre zone de nettoyage (24) comprend une lance de nettoyage (42) qui est prévue pour s'engager au moins partiellement dans les côtés intérieurs des logements d'outil (12) lors de l'opération de nettoyage sur les logements d'outil (12).

12. Dispositif de retraitement (54) selon l'une quelconque des revendications précédentes, **caractérisé par** un boîtier (44) qui délimite au moins sur cinq côtés la zone de nettoyage (22) et en particulier l'autre zone de nettoyage (24).

13. Dispositif de retraitement (54) selon l'une quelconque des revendications précédentes, **caractérisé en ce que** l'unité de retraitement (16) comprend au moins une unité d'aspiration (46).

14. Dispositif de retraitement (54) selon l'une quelconque des revendications précédentes, **caractérisé en ce que** l'unité de retraitement (16) comprend au moins un séparateur (48).

15. Dispositif de retraitement (54) selon la revendication 12, **caractérisé par** un autre boîtier (52) qui délimite au moins sur cinq côtés la zone de conservation (38) et en particulier l'autre zone de conservation (40).

16. Dispositif de retraitement (54) selon la revendication 7, **caractérisé en ce que** la zone de conservation (38, 40) est disposée le long de l'autre axe de déplacement (32), en particulier horizontal, à côté de la zone de nettoyage (22, 24).

17. Système (56) comprenant un dispositif de retraitement (54) selon l'une quelconque des revendications précédentes et comprenant un robot de manipulation (58) pour un équipement automatique du dispositif de retraitement (54) avec des outils (10), des logements d'outil (12) et/ou des unités d'outil (14) et/ou pour un retrait d'outils (10), de logements d'outil (12) et/ou d'unités d'outil (14) du dispositif de retraitement (54) et comprenant un ou plusieurs appareils de la liste d'appareils suivante :
- appareil de serrage d'outil (60) pour un serrage au moins partiellement automatisé d'outils (10) dans des logements d'outil (12),
- appareil de mesure et/ou de réglage (62) pour des outils (10) pour un réglage et/ou une mesure au moins partiellement automatisés d'outils (10), de logements d'outil (12) et/ou d'unités d'outil (14),
- appareil de serrage par rétraction (64) pour un serrage et/ou un desserrage au moins partiellement automatisés par induction et/ou thermique d'outils (10) dans et/ou hors de logements d'outil (12),
- appareil de refroidissement (66) pour un refroidissement au moins partiellement automatisé de logements d'outil (12) ou d'unités d'outil (14) chauffés au préalable,
- appareil de montage d'outil (68) pour un montage au moins partiellement automatisé d'outils en plusieurs parties (10),
- station d'équilibrage (70) pour un équilibrage au moins partiellement automatisé d'unités d'outil (14).

18. Procédé de retraitement, en particulier de nettoyage et/ou de conservation, d'outils (10), de logements d'outil (12) et/ou d'unités d'outil (14) avec un dispositif de retraitement (54) selon l'une quelconque des revendications 1 à 16.

19. Procédé selon la revendication 18, **caractérisé en ce que** l'outil (10), le logement d'outil (12) et/ou l'unité d'outil (14) est tourné et/ou déplacé de haut en bas dans une étape de nettoyage (82, 112, 130, 132) et/ou dans une étape de conservation (84, 138, 144, 148) à l'intérieur d'au moins une des zones de nettoyage (22, 24) et/ou des zones de conservation (38, 40).

20. Procédé selon la revendication 18 ou 19, **caractérisé en ce que** l'outil (10), le logement d'outil (12) et/ou l'unité d'outil (14) est amené entre l'étape de nettoyage (82, 112, 130, 132) et l'étape de conservation (84, 138, 144, 148) d'une des zones de nettoyage (22, 24) dans une des zones de conservation (38, 40).
